# EUROPEAN PATENT SPECIFICATION

(11) **EP 3 493 708 B1**
(45) Date of publication and mention of the grant of the patent: **09.12.2020**
(21) Application number: 17748735.2
(22) Date of filing: 02.08.2017
(51) Int. Cl.: A47J 31/36

(54) **SYSTEM, APPARATUS AND METHOD FOR PREPARING A BEVERAGE**
SYSTEM, KAPSEL UND VERFAHREN ZUR HERSTELLUNG EINES GETRÄNKS
SYSTÈME, APPAREIL ET PROCÉDÉ POUR PRÉPARER UNE BOISSON

(30) Priority: 03.08.2016 NL 2017286
(43) Date of publication of application: 12.06.2019
(73) Proprietor: Koninklijke Philips N.V., 5656 AG Eindhoven (NL)
(72) Inventor: RIJSKAMP, Peter, 5656 AE Eindhoven (NL); OGINK, Judith, Margreet, Hanneke, 5656 AE Eindhoven (NL); KOOIJKER, Klaas, 5656 AE Eindhoven (NL); CORNELISSEN, Marjan, Willeke, Esther, 5656 AE Eindhoven (NL)
(74) Representative: Philips Intellectual Property & Standards
(86) International application number: PCT/EP2017/069582
(87) International publication number: WO 2018/024799

(56) References cited:
- WO-A1-2014/174462
- US-A1- 2015 238 039
- US-A1- 2015 272 376

## Description

### FIELD OF THE INVENTION

The invention generally relates to an apparatus for preparing a beverage. Here the invention also relates to a system and method for preparing a beverage. Further the invention relates to a capsule and a method for locking two brew chamber parts relative to each other. Also the invention relates to a system for preparing a beverage using a capsule.

### BACKGROUND OF THE INVENTION

Apparatus for preparing a beverage, especially by use of a capsule comprising a beverage preparation product, like ground coffee etc., are known from the state of the art. Normally a capsule is adapted to a respective apparatus and can be arranged within a brew chamber of this apparatus so that a fluid for beverage preparation can be introduced to the capsule. After a specific brewing process a prepared beverage can be discharged for consumption. Beside those apparatuses using capsules also apparatuses are known from the art providing a brew chamber where a beverage preparation product, e.g. ground coffee, can be inserted without use of a capsule, and especially placed on a filter bed, and where by introduction of liquid a beverage can be prepared and then discharged for consumption.

It is relevant for such apparatuses, especially when fluids for the beverage production are introduced under high pressure, which can rise up to around 18 bar, that the parts providing the brew chamber in which the capsule or the beverage preparation product is hold, are kept together without deviation relative to each other. Separation of the parts has to be omitted, especially during the beverage preparation process.

Arrangement of a closing and opening mechanism for the parts of a brew chamber is technically feasible in many cases and requires multiple elements, which are subjected to high impacts during the preparation process. This is especially the case the more complex the apparatus gets, especially in the field of systems and apparatuses where different sized capsules can be inserted in one and the same apparatus.

Further, some of today's beverage preparation machines usually have a closing and locking mechanism that works with a crank mechanism. This mechanism is fully described in several patents in combination with specific elements, for instance in US-A-2015/0238039. Characteristic of this type of mechanism is a big horizontal lever to operate the mechanism.

The problem of the existing mechanism are mainly related to the huge number of parts to get the mechanism work in a reliably way. Many of these parts are involved in the load chain and are exposed to high forces. The huge number of parts also leads to an immense tolerance chain. Both, the number of parts exposed to high forces and the tolerance chain, lead to inaccuracy of the stroke and therefore spread on the closing force of the moving chamber to the fixed chamber. To compensate for this problem usually "hydraulic compensation" is added. This is a system that compensates for the spread of the stroke due to tolerances, for the deformation during brewing and for deformation during lifetime (creep). Other disadvantages of the hydraulic compensation are e.g. an increased amount of rest water, longer after dripping and negative impact on the (especially first) cup temperature.

In the light of the above a need exist to provide a solution for a reliable closing and opening of a brew chamber and their respective positioning especially during beverage preparation.

### SUMMARY OF THE INVENTION

The above object is solved by the subject matter of the independent claims.

In detail, the object is solved by an apparatus according to claim 1.

It may hold that the apparatus comprises an activation means, such as a manual lever, arranged for moving the first and/or the second brew chamber part. Especially in this regard it may hold that the arresting part is being coupled to the activation means for being moved by the latter.

Further it may hold that the brew chamber is arranged for holding a capsule holding a beverage preparation product.

The object is also solved by a system including an apparatus as described herein and an exchangeable capsule. This capsule may comprise a body and an exit face attached to the body.

Further the object is solved by a method for preparing a quantity of beverage suitable for consumption, including: introducing a beverage preparation product, e.g. a capsule having a body and an exit face attached to the body, into a first and/or second brew chamber part of an apparatus as defined herein, wherein the first and second brew chamber parts are in the open position; moving the first and second brew chamber parts relative to each other from the open position to the closed position, wherein in the closed position the second brew chamber part closes the first brew chamber part for forming the brew chamber surrounding the beverage preparation product; supplying a fluid to the beverage preparation product for beverage preparation; and discharging a prepared beverage from the brew chamber, wherein while moving the first and second brew chamber parts relative to each other from the open position to the closed position, the latching member and the counter-latching member are moved relative to each other from their un-latching position to their latching position, and wherein while and/or after moving the first and second brew chamber parts relative to each other from the open position to the closed position, the arresting part is moved relative to the latching member and the counter-latching member from its un-arresting position to its arresting position, thereby arresting and/or actuating an engagement of the latching member and the counter-latching member in their latching position so that the first brew chamber part and the second brew chamber part are arrested relative to each other in their closed position.

It may hold that moving the first and second brew chamber parts relative to each other from the open position to the closed position and/or vice versa is archived by activating an activation means, and especially by moving a manual lever. Especially in this regard it may hold that the arresting part is also moved by this activation means.

The object is further solved by a method for locking a first brew chamber part relative to a second brew chamber part of a system or of an apparatus as defined herein, comprising the steps of: Moving the first and second brew chamber parts relative to each other from the open position to the closed position, wherein in the closed position the second brew chamber part closes the first brew chamber part for forming the brew chamber; while moving the first and second brew chamber parts relative to each other from the open position to the closed position, moving the latching member and the counter-latching member relative to each other from the un-latching position to the latching position, and while and/or after moving the first and second brew chamber parts relative to each other from the open position to the closed position, moving the arresting part relative to the latching member and the counter-latching member from its un-arresting position to its arresting position, thereby arresting and/or actuating an engagement of the latching member and the counter-latching member in their latching position so that the first brew chamber part and the second brew chamber part are arrested relative to each other in their closed position.

Also here it may hold that moving the first and second brew chamber parts relative to each other from the open position to the closed position and/or vice versa is archived by activating an activation means, and especially by moving a manual lever, wherein optionally the arresting part is moved by the same activation means.

Also the object is solved by a capsule for use in a system or an apparatus as defined herein.

A capsule can be any kind of volume body having a body and at least one exit face able to comprise a beverage preparation product as known from the art. Preferably, a capsule is to be understood having a rigid body and a bottom portion and an exit face arranged opposite to the bottom portion thereby enclosing a space for a beverage preparation product. However such a capsule has to also be understood as being a pad, a refillable volume, a pouch etc. The invention however does not only relate to systems, apparatuses and methods making use of beverage preparation products provided in capsules but can also relate to systems, apparatuses and methods where the beverage preparation products is inserted or provided in the brew chamber individually, e.g. by inserting the same on a filter bed or similar filter and especially without use of a capsule. The capsules can be hermetically closed prior to insertion into the apparatus. The closed capsules can e.g. be opened by the apparatus. Alternatively, non-sealed or refillable capsules could also be used. The beverage preparation product can be e.g. roast coffee, ground coffee, powdered coffee. The beverage preparation product can also be a liquid.

By movement of the first brew chamber part relative to the second brew chamber part a brew chamber is defined enclosing the beverage preparation product, e.g. a capsule comprising the same or the beverage preparation product itself, which may be introduced in a cavity. In this situation the beverage preparation product is hold in the cavity, especially arranged at the first brew chamber part being closed by the second brew chamber part. If the apparatus is provided for entering capsules to the brew chamber, relief elements, which can be any kind of passive or active opening elements, as will be further explained, can be provided to open this capsule on its exit face side for discharge of a prepared beverage. Piercing elements, which can be any kind of passive or active opening elements, as will be further explained, can be arranged on the inlet side for introduction of a liquid for the beverage preparation. If the beverage preparation product is entered to the brew chamber without use of a capsule, such piercing elements can be provided as fluid supply means to only deliver a brewing fluid to the brew chamber, e.g. a pressurized or non-pressurized fluid. Especially the apparatus can include a fluid supply system for supplying a fluid, e.g. a liquid, such as hot water under pressure, to the first brew chamber and the beverage preparation product provided there. The apparatus may be arranged such that liquid can be introduced to the beverage preparation product hold in the cavity for beverage preparation and producing a beverage which can be discharged from the brew chamber after a certain time. The cavity of the first brew chamber part can be a predetermined cavity arranged for holding the first or second capsule. The cavity can have an invariable shape for holding the first or second capsule. The first brew chamber part can be arranged for holding the first or second capsule without changing a configuration of the first brew chamber part. The first brew chamber part can be a monolithic part.

The invention is inter alia based on the fact that the first and the second brew chambers can be locked by an arresting mechanism. Optionally this arresting mechanism can be provided to be activated by an activation means, which also serves for moving the first and second brew chamber parts between the open and the closed position. It may hold that especially the arresting part can be activated by the activation means and in detail is movable by the activation means between its arresting and un-arresting position. The coupling between the activation means and the arresting mechanisms and especially the arresting part can be a direct and/or an indirect coupling. A direct coupling comprises e.g. a direct connection between at least one part of the activation means, e.g. a knee joint, and to the arresting mechanism, e.g. the arresting part. An indirect coupling may e.g. be provided by at least one part of the activation means, e.g. a knee joint, coupled to a different part than a part of the activation mechanism, wherein movement of this different part activates the arresting mechanism, e.g. the arresting part. This is going to be explained in detail further down below. It may also hold that at least a part of the arresting mechanism and especially the arresting part is provided such that it can be activated by an individual activation mechanism. It may also hold that at least a part of the arresting mechanism and especially the arresting part is provided such that it can be activated by a user and especially independently of the movement of the first and second brew chamber parts.

As a basic result of the invention, the system and apparatus do have a limited number of parts in the tolerance chain. Furthermore, as arresting forces are transferred from the brew chamber parts to the arresting mechanism, the load on all parts involved, and especially the parts constituting the activation means for moving the brew chamber parts, is much easier to handle because it leads mainly to shear stress and tensile stress whereas, for the existing systems, the provided elements are mainly exposed to bending. Obviously when fewer parts are used the assembly can be more compact, it offers much more design freedom and of course costs will be lower too. The new brew chamber concept is more compact and it offers freedom in several fields, e.g. the way to how to activate the brew chamber mechanism, inter alia the movement of the two brew chamber parts, the orientation of the brew chamber, e.g. horizontal, vertical or anything in between, the possibility of easy adaption to various capsule sizes.

The open position may be the position where a beverage preparation product, and especially a capsule, can be inserted to the apparatus and especially into a cavity of the first or second brew chamber part. In the open position, the respective brew chamber part for holding the beverage preparation product may be arranged in a loading position so that the beverage preparation product can be inserted in its cavity.

In the closed position the first and second brew chambers parts are forming a brew chamber surrounding the beverage preparation product. This can also be a brewing position where beverage preparation and especially infusion of a liquid, opening of the capsule, etc. may be performed. In the closed position the first and second brew chamber parts may abut against each other, to especially form a closed brew chamber.

The activation means can be a manual or motor driven activation means for moving the brew chamber parts relative to each other. As explained further below the activation means may comprise a lever which can be moved by a user to perform the closing and/or opening movement of the two brew chamber parts. The activation means might also be provided as a mixed activation means comprising manual and motorized activation elements.

To guarantee, especially during the beverage preparation process, that the two brew chamber parts forming the brew chamber are arrested relative to each other, viz. that they will not unintentionally be separated from each other, the arresting mechanism is provided.

The arresting mechanism comprises the latching member arranged at the first brew chamber part and the counter-latching member arranged at the second brew chamber part, or vice versa. The latching member and the counter-latching member are being movable relative to each other between a latching position and an un-latching position. In this latching position they might be in engagement, preferably at least partially locking themselves relative to each other. It is also possible that the latching member and the counter-latching member in the counter-latching member are arranged such that they are forced to their final latching position by the arresting part. E.g. the arresting part can be arranged to pivot a retainer of the latching member around a protrusion of the counter-latching member, or vice versa, thereby activating the latching and further arresting the members in their latching position. This will be explained in more detail further below.

The arresting mechanism may be arranged such that forces, and especially forces acting along a central axis of the first brew chamber part and/or the second brew chamber part and/or a brew chamber axis, for un-latching the engagement and a meshing between the latching member and the counter-latching member, respectively, are lower and especially substantially zero, when the arresting part is in its un-arresting position than when it is in its arresting position.

It may hold, that the latching member and the counter-latching member are arranged being movable relative to each other between the latching position and the un-latching position together with the first brew chamber part and the second brew chamber part, respectively, especially when the arresting part is not in its arresting position.

Especially in this regard the latching member and/or the counter-latching member may be integrally arranged at the first brew chamber part and/or the second brew chamber part, respectively. The latching member may be integrally arranged at the first brew chamber part and/or the counter-latching member may be integrally arranged at the second brew chamber part, or vice versa. Integrally arranged here also covers attachment of the members via separate attachment means like grooves, gluing, bolts, notches, rivets etc. or any similar attachment means. In principle it is possible that the latching member and/or the counter-latching members are connected to the first brew chamber part and/or the second brew chamber part, respectively, such that they are moved as soon as the parts are moved. Then preferably, as soon as the first brew chamber part is moved relatively to the second brew chamber part, also the latching member is moved relative to the counter-latching means.

The arrangement may be such that when the first brew chamber part and the second brew chamber part reach the closing position also the latching member and the counter-latching member reach their latching position, and especially at the same time. This may also apply in the opposite direction, viz. that when the first brew chamber part and the second brew chamber part begin to move in direction of and/or reach the opening position also the latching member and the counter-latching member begin to move or reach their unlatching position, respectively. It however may be arranged that the un-latching position is reached before the first brew chamber part and the second brew chamber part reach the opening position.

It may hold that the latching member and/or the counter-latching member are movable relative to each other along a central axis of the first brew chamber part and/or the second brew chamber part and/or a brew chamber axis, and especially without rotational movement around this axis. This may apply irrespective whether the members are connected and especially integrally arranged at their respective brew chamber parts. In general the brew chamber parts may be arranged such that movement between the open position and the closed position is performed without any rotational movement around a central axis of the first brew chamber part and/or of the second brew chamber part and/or around a brew chamber axis. This axis in general may be an axis the two brew chambers parts move along relative to each other shortly before reaching the closed position. It may also hold that the first and second brew chamber parts, especially shortly before reaching the closed position, are movable relative to each other along a common central axis and/or a brew chamber axis, and especially without rotational movement around this axis.

The central axis A_{C1} of the first brew chamber part and/or the central axis A_{C2} of the second brew chamber part and/or the brew chamber axis A_{BC} may be defined as to be arranged co-axial to a length axis A_{R} of a capsule and especially an axis orthogonally arranged to its exit face.

It may hold that the arresting part is arranged at the first brew chamber part and/or the second brew chamber part.

Within the invention disclosure it may apply that the definitions where co-operating parts are arranged, e.g. the latching and counter-latching members, protrusions and retainers (as explained further below), locking-parts and brew chamber parts or latching and counter-latching members, respectively, might also be understood as such the respective parts can be arranged vice versa, i.e. at the other co-operating part as the one mentioned in the respective context.

It may hold that the arresting part is an arresting ring arranged surrounding at least partially the first brew chamber part and/or the second brew chamber part, and it may further hold that the arresting part is arranged movably along a central axis of the first brew chamber part and/or the second brew chamber part and/or a brew chamber axis. Especially, it may hold that the arresting part is arranged axially movable relative to the first brew chamber part and/or the second brew chamber part.

It can also be provided that the arresting part comprises at least one pivotable part being pivotable around an axis A_{P} substantially orthogonal to a central axis A_{C1}, A_{C2}, A_{BC} of the first brew chamber part and/or the second brew chamber part and/or a brew chamber axis. Especially in this regard it may hold that the movement of the arresting part between the arresting position and the un-arresting position comprises a pivoting movement of its pivoting part. This pivoting can be directly and indirectly actuated by the activation means or the activation mechanism. It can e.g. be activated by a movement of the latching and/or counter-latching member.

In principle it may be provided that the arresting part is guided by an external surface of the first brew chamber part and/or the second brew chamber part. The arresting part arranged according to one of the above features is easy to produce, guaranteeing its movability along at least one brew-chamber part and especially in direction of the latching member and/or the counter-latching member. It can e.g. be provided such that it can be slid over the latching and counter-latching members, respectively, for arresting and/or activating their engagement and especially meshing, respectively. The arresting part may be arranged such that, by movement in the opposite direction, it may free this engagement or support freeing this engagement.

The arresting part may have the form of a full ring, surrounding the first brew chamber part and/or the second brew chamber part, it may however also be provided as at least one segment or multiple segments. It may be at least partially resilient or rigid. Especially in combination with a locking part, explained further below, it might be arranged that the arresting part has at least one resilient portion for actively forcing the latching member and the counter-latching member together in an engagement or to introduce an additional latching force for strengthening the engagement and the arresting of the two brew chamber parts relative to each other, respectively.

It may hold that the arresting part is connected to one of the brew chamber parts, and especially the first brew chamber part via one or more resilient elements. Such a resilient element can e.g. be a helical spring. The resilient element can be attached to the arresting part and/or the brew chamber part such that tension forces only or pressing forces only, or both, can be supported and transferred from one part to the other and vice versa.

Especially with regard to the above resilient element, it may hold that in the arresting position the arresting part is biased in direction of the un-arresting position. This e.g. may allow reliable and fast opening of the arresting position and therefore of the latching and the arresting, e.g. as soon as the activation means is activated to move the brew chamber parts from the closed to the open position. This is especially the case where the arresting part is coupled with the activation means.

It may hold that the activation means is directly coupled to the arresting part. Especially it may hold that the first brew chamber part is coupled to the arresting part via the one or more resilient elements. In a further embodiment the first brew chamber part may be movable by the activations means via the resilient element and the arresting part especially only. By the above features, especially a timed movement of the brew chamber parts, the latching and counter-latching members and the arresting part can be arranged. In principle one and more of the before features guarantee that the brew chamber parts are being moved in a timed manner relative to the arresting part. As the movement of the brew chamber parts is preferably directly coupled to the movement of the latching and counter-latching members, it can be easily controlled that e.g. arresting of the latching engagement is performed not before the brew chamber parts reach their closed position. The same applies in opposite direction, wherein it can be easily guaranteed that separation of the brew chamber parts relative to each other is initiated not before the arresting is freed and so the latching engagement is freed, too.

It has to be mentioned that the definitions of the arrangement of the arresting part, the resilient element, and of other parts, elements, means and members at the first brew chamber part may be provided especially when the first brew chamber part is the movable part of the brew chamber, i.e. is moved by the activation means towards and away from the second brew chamber part during the movement between the open and closed position. The second brew chamber part may, preferably be arranged as an immobile part, with regard to the first brew chamber part. If the second brew chamber part is the movable part, it may hold that the above definitions of the arrangement also cover a respective arrangement at the second brew chamber part.

Further it may be arranged that the modulus of elasticity of the resilient element is such, that during a closing movement the activation means moves the first or second brew chamber part relative to the second or first brew chamber part in the closed position before the arresting part reaches its arresting position and especially before the arresting part moves to its arresting position. Especially in this regard the arresting mechanism may be arranged to be actuated while closing the first brew chamber part against the second brew chamber part, wherein the arresting part reaches its arresting position after the closed position is reached. During separating the first and the second brew chamber part, it may hold that the arresting mechanism is arranged that the arresting part reaches its un-arresting position before the first and the second brew chamber part start to move apart relative to each other. The arresting mechanism is preferably arranged such that this moving apart preferably starts, as soon as the latching engagement can be freed, viz. as soon as the latching members and the counter-latching member can move from their latching position to their un-latching position. This is controlled by the movement and timing of the movement of the arresting part.

It may hold that the activation means comprises a knee joint especially connected to an activation lever. A detailed example how this knee joint can be arranged can be found further below. The knee joint may be arranged such that in the closed position it is arranged in a stretched position, especially substantially aligned parallel to a central axis of the first brew chamber part and/or the second brew chamber part and/or a brew chamber axis. Such a stretched position is preferably a position where most of the forces to be transferred from one end of the knee joint to the other end are transferred as normal forces and especially without any momentums acting on the knee joint. By such an arrangement the dimensions of the activations means can be reduced.

The arresting part in the arresting position at least partly surrounds the latching member and/or the counter-latching member and especially abuts against the latching member and/or the counter-latching member. Especially in this arrangement the arresting part can be provided such that it can be slid along at least one axis co-axial to the axis of the first and/or second brew chamber part or the brew chamber axis, and especially along an axis the two parts are moving along shortly before they reach the closed position, into this surrounding position. Surrounding means especially that the arresting part surrounds the latching and counter-latching member from an outside (with regard to a main axis of the brew chamber, i.e. it is arranged further away from the axis than the members).

The engagement of the latching and counter-latching members may be activated by a movement of parts of the respective members relative to each other. This movement of the engaging parts, e.g. of a protrusion and of a retainer (as explained further below) may be oriented along an axis orthogonal to the main axis of the brew chamber parts in their closed position and/or an axis orthogonal to a central axis of the first brew chamber part and/or an axis orthogonal to a central axis of the second brew chamber part and/or an axis orthogonal to a brew chamber axis. Preferably the moving direction of the arresting part between its arresting and un-arresting position, is then oriented in a direction orthogonal thereto and preferably in a direction parallel to the central axis of the first and/or of the second brew chamber part and especially parallel to the axis the two parts are moving along shortly before they reach the closed position, or to the brew chamber axis.

It may hold that the arresting part in the arresting position biases the latching member and/or the counter-latching member in their engagement, thereby arresting the first and second brew chamber parts relative to each other.

In general it may hold that the latching member and the counter-latching member are meshing with each other in the arresting position and especially in their latching position. Especially in this regard it may hold that the latching member and the counter-latching member are not meshing or at least meshing to a lower extend with each other in the un-arresting position and especially in their un-latching position. In general it may be provided that the arresting part arrests the meshing in its arresting position and/or allows for disengagement of the meshing in its un-arresting position.

It may hold that the meshing can be dis-engaged by moving the first and second brew chamber parts from their closed position in direction of their opened position, especially when the arresting part is not in the arresting position. Also the meshing may be disengageable by moving the first and second brew chamber parts from their closed position in direction to their opened position along an axis parallel to the central axis of the first brew chamber part and/or the second brew chamber part and/or the brew chamber axis, especially when the arresting part is not in the arresting position. The arresting part may arrest the meshing in its arresting position.

It may hold that the latching member comprises at least one protrusion and/or the counter-latching member comprises at least one retainer, or vice versa. The protrusion may be arranged meshing with the retainer in the arresting position and especially in the latching position. It may also be provided that both brew chamber parts are having a protrusion, especially facing and/or abutting against each other in direction of the central axis of the first brew chamber part and/or the second brew chamber part and/or the brew chamber axis in the closed position, wherein the retainer meshes with both of these protrusions, for especially arresting them together. Especially here the retainer can be provided at any of the two brew chamber parts. In general multiple known meshing arrangements can be provided and especially arrangements where two parts can be brought into and out of engagement by moving at least one of the two parts in an engagement direction and, opposite thereof, in a disengagement direction, respectively. These two directions are, as already mentioned, preferably arranged orthogonal to the movement direction of the arresting part between its arresting and un-arresting position and/or of the movement direction of the two brew chamber parts at least shortly before they reach the closed position.

It may hold that the latching member and the counter-latching member are meshing with each other in the latching position, wherein the meshing can be dis-engaged by moving the first and second brew chamber parts from its closed position in direction of the opened position, when the arresting part is not in the arresting position. In general the arresting part may arrest the meshing in its arresting position. This arrangement can be provided as a snap-engagement.

Especially with such an arrangement it may be provided that at least one of the meshing parts of the latching member and the counter-latching member has to overcome a meshing threshold when the respective two members, viz. the latching member and the counter-latching member, are moving from the un-latching position to the latching position and/or when moving vice versa. At least one of these parts may then be provided as resilient part and/or may be arranged in a resilient and especially pivotable manner.

It may hold that the protrusion is formed as a substantially annular ring protrusion. It may further hold that the protrusion is extending substantially orthogonal to the central axis of the first and/or the second brew chamber part and/or the central brew chamber axis. The protrusion may be formed as a full ring or as at least one ring segment or multiple segments. It can also be arranged at multiple positions around the brew chamber and especially along at least one ring form line.

The protrusion can comprise different means. E.g. it may comprise at least one sphere meshing with the retainer in the arrested position and especially in the latching position. The protrusion may comprise at least one snapping element meshing with the retainer in the arrested position and especially in the latching position. Further the protrusion may comprise at least one resilient ring or similar resilient member meshing with the retainer in the arrested position and especially in the latching position. Also the protrusion may comprise at least one cam element especially biased in direction of the retainer, meshing with the latter in the arrested position and especially in the latching position. Such a cam element can e.g. be arranged on a resilient ring or similar preferably resilient carrier element.

The protrusion may also form an outermost edge of the first brew chamber part or the second brew chamber part.

Of course also multiple protrusions and respective rings may be provided, especially distributed in a direction along the axis of the brew chamber.

As mentioned, it may hold that the counter-latching means comprises a retainer, and especially a retainer for cooperating or meshing with the protrusion. The retainer and the protrusion may be provided as complementary designed elements. Such an arrangement can be provided as a snapping mechanism providing a meshing between the latching member and the counter-latching member.

This meshing can be provided as arresting the two brew chamber parts relative to each other and especially in a direction of a central axis of the first brew chamber part and/or the second brew chamber part and/or a brew chamber axis.

The retainer may comprise e.g. at least one tooth and/or recess. A tooth and/or recess of the retainer may be arranged for meshing with a protrusion of the latching member, or vice versa. Also a tooth can be arranged such that it activates the meshing engagement via pivoting the retainer or a portion of the retainer and/or a portion of the protrusion for allowing activation of the meshing engagement. This applies also for deactivation of the meshing, i.e. freeing of the engagement. A snap-fit can be provided by the retainer and the protrusion, wherein the tooth may activate engagement and/or disengagement of this snap fit especially by a sliding movement along the protrusion. In principle it holds that recesses and/or tooth can be provided at least at one of the latching and counter-latching members and that co-operating protrusions are provided at least at the corresponding other one of the latching and counter-latching member.

It may hold that the retainer especially has a resilient portion, especially pivotable around an axis substantially orthogonal to a central axis of the first brew chamber part and/or the second brew chamber part and/or a brew chamber axis. This axis can also be the moving axis of the arresting part or an axis parallel to a protrusion axis of a protrusion of the latching member or the counter-latching member, respectively. This resilient portion can e.g. be at least one pivotable arm. The portion may comprise the tooth and/or the before mentioned recess and/or. A protrusion may also be provided at such a pivotable arm or similar element.

It may hold that the retainer has the form of an at least partly circumferential ring. Here the same may apply that has been explained with regards to the ring-form of the protrusion.

It may hold that the arresting part is arranged such that in its arresting position it, inwardly and/or outwardly, surrounds the retainer preventing the retainer from releasing its meshing with the protrusion and especially from pivoting, thereby arresting the first brew chamber part with respect to the second brew chamber part. Here the same may apply that has been explained with regards to the arresting part surrounding the latching and counter-latching members.

It may hold that in the arresting position the arresting part is surrounded by a locking part, arranged at the second brew chamber part or the first brew chamber part. It may hold that the locking part is a locking ring, arranged at least partly surrounding the first brew chamber part and/or the second brew chamber part. The locking ring can be a full ring or comprise at least one ring segment.

The locking part may be arranged immobile at either one of the first or second brew chamber part and especially at a body thereof. It may be formed to be more stable, especially more rigid against a force perpendicular to its surface than the arresting part.

Preferably the locking part is arranged so that the arresting part especially in its arresting position at least partly abuts against especially a surface of the locking part. It may hold that in the arresting position the arresting part is interposed between the locking part and at least one of the latching member, the counter-latching member and the retainer. At least a part of the latching member and/or the counter-latching member may be arranged to abut against the arresting part. The arresting part may abut against the locking part. By this arrangement forces can be transferred from the latching member and the counter-latching member, respectively, to the locking part and especially to the body of the first or second brew chamber part and possibly further to a frame of the apparatus. The locking part may be arranged that it provides a moving space for the latching member and/or the counter-latching member when the arresting part is not in its arresting position. It can be arranged opposite the latching member and/or the counter-latching member, especially when they are in their latching position, especially facing in direction of the pivoting directing of a pivoting portion of the same and especially of the retainer.

It may hold that the system also comprises a further exchangeable capsule, also called a first exchangeable capsule herein, having a further body and a further exit face attached to the further body, the exit face of the before mentioned exchangeable capsule, which is also called a second exchangeable capsule herein, having a larger diameter than the further exit face of the further exchangeable capsule, and wherein first brew chamber part is comprising the cavity, arranged for selectively holding one of the exchangeable capsule and the further exchangeable capsule, and the second brew chamber part is arranged for closing the first brew chamber part around the exchangeable capsule or the further exchangeable capsule, for forming the brew chamber, wherein the second brew chamber part has an extraction plate for abutting against the exit face or the further exit face, the extraction plate including a central portion and a peripheral portion, the central portion being especially axially movable relative to the peripheral portion between a first position and a second position, wherein the central portion is moved between the first and the second position by the movement of the first brew chamber part relative to the second brew chamber part. Such a brew chamber arrangement can be reliably locked by the described locking mechanism according to the invention.

In principle, the exchangeable capsule and the further exchangeable capsule may be of different size and preferably comprise an axial length, wherein the axial length of the exchangeable capsule may be larger than the axial length of the further exchangeable capsule. With regard to the diameter it may apply that the exchangeable capsule's diameter is larger than the diameter of the further exchangeable capsule. This diameter is preferably the diameter measured in the area of the exit face. The capsules may comprise a flange or a flange-like rim, respectively, wherein the diameter difference of the two capsules may then preferably be measured at the outer diameter of this flange-like rim. It is also possible to define this diameter at the inner diameter of this flange-like rim.

As mentioned before, the invention also relates to a method for preparing a beverage suitable for consumption. For redundancy reasons, the different embodiments of these methods are not explained in detail, but it is referred to all the features explained herein especially dealing with the system, the apparatus and the capsule, respectively. It is obvious that these features can also be provided with the method for beverage production, and vice versa. This also applies for the described apparatus and the exchangeable capsule.

Again, it will be appreciated that any of the embodiments, aspects, features and options described in view of the apparatus apply equally to the system, the capsule and the methods. It will also be clear that any one or more of the above embodiments, aspects, features and options can be combined.

Further embodiments of the invention are defined by the sub-claims.

### BRIEF DESCRIPTION OF THE DRAWINGS

The invention will further be elucidated on the basis of exemplary embodiments which are represented in a drawing. The exemplary embodiments are given by way of non-limitative illustration.

For a better understanding, in the following the exchangeable capsule mentioned above, especially of the system according to the invention, is called a "second exchangeable capsule". The before mentioned further exchangeable capsule, which can optionally be provided and used with the system and apparatus, respectively, will be called a "first exchangeable capsule". The same applies with regard to the respective bodies, exit faces, lids, and exit areas of the two different capsules, as will be explained further below. They will be labelled as first or second, respectively, depended on what capsule they relate to.

It is noted that the Figures are only schematic representations of embodiments of the invention that are given by way of non-limiting example.

In the drawing:
Fig. 1A shows a schematic representation of one embodiment of the apparatus and system according to the invention, respectively, holding a first exchangeable capsule in an open position;
Fig. 1B shows the schematic representation of the embodiment of Fig. 1A, holding a second exchangeable capsule;
Fig. 2A shows a schematic isometric representation of the apparatus according to Fig. 1A;
Fig. 2B shows a schematic semi-transparent side view of the apparatus according to Fig. 2A;
Figs. 3A and 3B show a detailed schematic representation of the apparatus according to Fig. 1 holding a first exchangeable capsule;
Figs. 4A and 4B show a detailed schematic representation of the apparatus according to Fig. 1 holding a second exchangeable capsule;
Figs. 5A to 5C show a schematic representation of the apparatus of Fig. 1 and an arresting process of a first brew chamber part relative to a second brew chamber part;
Fig. 6A shows a schematic representation of the apparatus according to Fig. 1 with a first exchangeable capsule hold;
Fig. 6B shows a schematic representation of the apparatus according to Fig. 1 with a second exchangeable capsule hold;
Fig. 7A shows a schematic representation of a side view of the embodiment of Fig. 1 during ejection of a first exchangeable capsule;
Fig. 7B shows a schematic representation of a side view of the embodiment of Fig. 1 during ejection of a second exchangeable capsule;
Fig. 8A shows a schematic representation of a side view of a first brew chamber part holding a first exchangeable capsule;
Fig. 8B shows a schematic representation of a side view of a first brew chamber part holding a second exchangeable capsule;
Fig. 9 shows a schematic representation of a side view of a first brew chamber part and a second brew chamber part;
Fig. 10 shows a schematic representation of a side view of a first brew chamber part, a second brew chamber part and a part of an activation means;
Figs. 11A to 11C show a schematic representation of a side view of a first and a second brew chamber part in a closed, intermediate and open position;
Figs. 12A and 12B show a schematic representation of a detailed side view an arresting mechanism;
Fig. 13 shows a schematic representation of a side view of a further embodiment of an arresting mechanism;
Figs. 14A and 14B show a schematic representation of a side view of a further embodiment of an arresting mechanism;
Fig. 15A shows a schematic representation of a side view of a further embodiment of an arresting mechanism;
Figs. 15B to 15D show a schematic representation of multiple embodiments being part of a protrusion;
Fig. 16 shows a schematic representation of a side view of a further embodiment of an arresting mechanism; and
Figs. 17 to 19 show schematic representations of embodiments of a retainer.

### DETAILED DESCRIPTION OF THE EMBODIMENTS

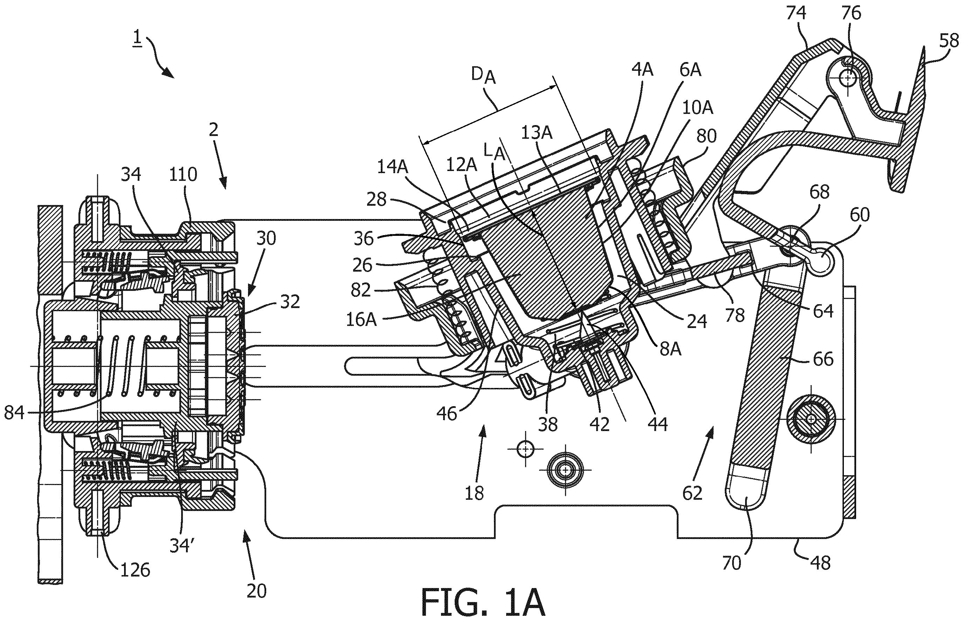

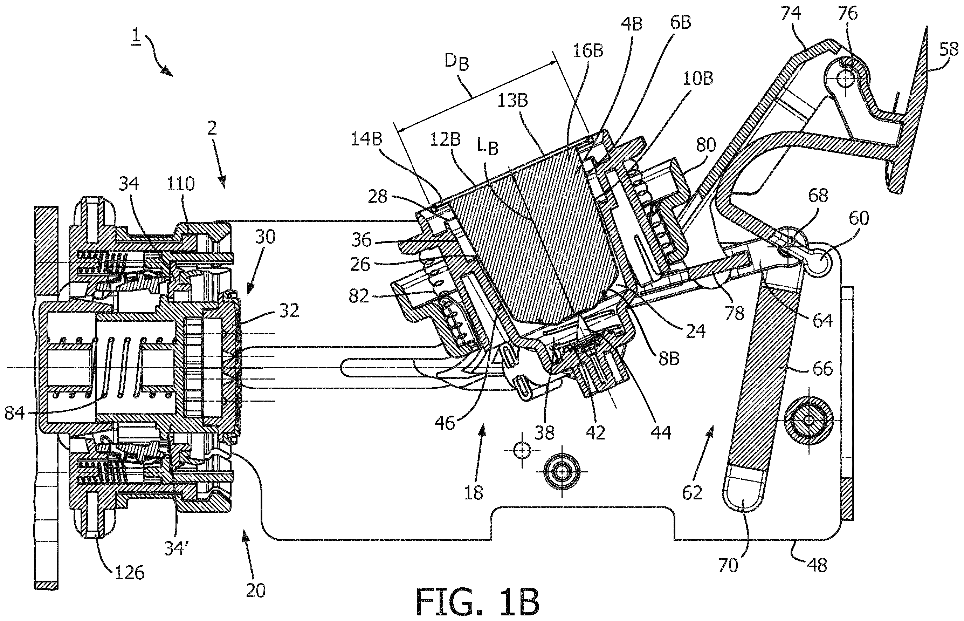

Figs. 1A and 1B show schematic cross sectional views of a system 1 for preparing a beverage. The system includes an apparatus 2 and ad least one exchangeable capsule, i.e. a second exchangeable capsule 4B and further optionally a further exchangeable capsule, i.e. a first exchangeable capsule 4A. Here the apparatus 2 is arranged for cooperating with the second exchangeable capsule 4B and optionally with the first exchangeable capsule 4A. The apparatus 2 shown in Figs. 1A and 1B is one and the same apparatus. The apparatus 2 is arranged for selectively cooperating with either the first exchangeable capsule 4A (see Fig. 1A) or the second exchangeable capsule 4B (see Fig. 1B). It will be appreciated that the system 1 can include the apparatus 2, the second exchangeable capsule 4B and also the first exchangeable capsule 4A. It will be appreciate that the apparatus however can also be provided such that it can be used without any capsule, viz. that a beverage preparation product can be inserted directly to the brew chamber without the use of a capsule, and especially on a filter bed.

The first and second exchangeable capsules 4A, 4B are of a different type. In this example, the second exchangeable capsule 4B is larger than the first exchangeable capsule 4A. An axial length L_{B} of the second exchangeable capsule 4B may be larger than an axial length L_{A} of the first exchangeable capsule 4A. A diameter D_{B} of the second exchangeable capsule 4B may be a larger than a diameter D_{A} of the first exchangeable capsule 4A. Notwithstanding the differences, in this example the first and second exchangeable capsules 4A, 4B are designed to make a similar visual impression. The first and second exchangeable capsules 4A, 4B are designed to have a family look and feel. Here a ratio of the axial length and diameter L_{A}/D_{A} of the first exchangeable capsule 4A is substantially the same as a ratio of the axial length and diameter L_{B}/D_{B} of the second exchangeable capsule 4B. Preferably, the length to diameter ratio of the first and second exchangeable capsules is identical within 20%, preferably within 10%, e.g. identical.

The two capsules 4A and 4B may provide a set of capsules to be used in the apparatus 1.

In view of the similarity, both capsules 4A, 4B will now be described simultaneously. In this example, the capsules 4A, 4B both include a cup-shaped body 6A, 6B. Here the cup-shaped body 6A, 6B includes a bottom 8A 8B and a circumferential wall 10A, 10B. The bottom 8A, 8B and the circumferential wall 10A, 10B can form a monolithic part. The capsules 4A, 4B both include an exit face 12A, 12B, especially comprising a lid, attached to the body. The exit face 12A, 12B closes off an open end of the cup-shaped body 6A, 6B. Here the lid closes of the open end. The exit face 12A, 12B includes an exit area 13A, 13B through which beverage can be drained from the capsule as explained below. In this example the exit face 12A, 12B comprises a flange-like rim 14A, 14B of the capsule 4A, 4B. Here the rim 14A, 14B is an outwardly extending rim. The bottom 8A, 8B, the circumferential wall 10A, 10B and the rim 14A, 14B can form a monolithic part. Here the exit area 13A, 13B defines the area of the exit face 12A, 12B, and here also of the lid respectively, through which the beverage can potentially exit the capsule 4A, 4B. Hence, an area of the exit face 12A, 12B, sealed to the rim 14A, 14B does not constitute part of the exit area 13A, 13B. In this example, the capsules 4A, 4B are substantially rotation symmetric around an axis extending from the bottom 8A, 8B to the exit face 12A, 12B. The cup-shaped body 6A, 6B and the exit face 12A, 12B enclose an inner space 16A, 16B of the capsule. The inner space 16A, 16B includes a quantity of beverage preparation product, such as an extractable or soluble substance. The beverage preparation product can e.g. be roast and ground coffee, tea, or the like. The beverage preparation product can be powdered coffee. The beverage preparation product can be a liquid. In view of the difference in size of the capsules 4A, 4B it will be appreciated that the second exchangeable capsule 4B can include a larger quantity of beverage preparation product than the first exchangeable capsule 4A. In this example, the inner space 16B of the second exchangeable capsule 4B is about twice the inner space 16A of the first exchangeable capsule 4A. For example, the first exchangeable capsule 4A may include 4-8 grams, e.g. about 6 grams, of ground coffee. For example, the second exchangeable capsule 4B may include 8-16 grams, e.g. about 12 grams, of ground coffee.

The cup-shaped body 6A, 6B can be manufactured from a metal foil, such as aluminium foil, a plastics material, such as polypropylene or polyethylene, or a combination thereof. The cup-shaped body 6A, 6B can be manufactured by pressing, deep-drawing, vacuum forming, injection moulding or the like. The exit face 12A, 12B and especially the lid can be manufactured from a metal foil, such as aluminium foil, a plastics material, such as polypropylene or polyethylene, or a combination thereof. In the example the capsules 4A, 4B are so-called closed capsules. This indicates capsules that are hermetically closed prior to insertion into the apparatus. The closed capsules can be opened by the apparatus as described herein. Alternatively, non-sealed or refillable capsules could also be used.

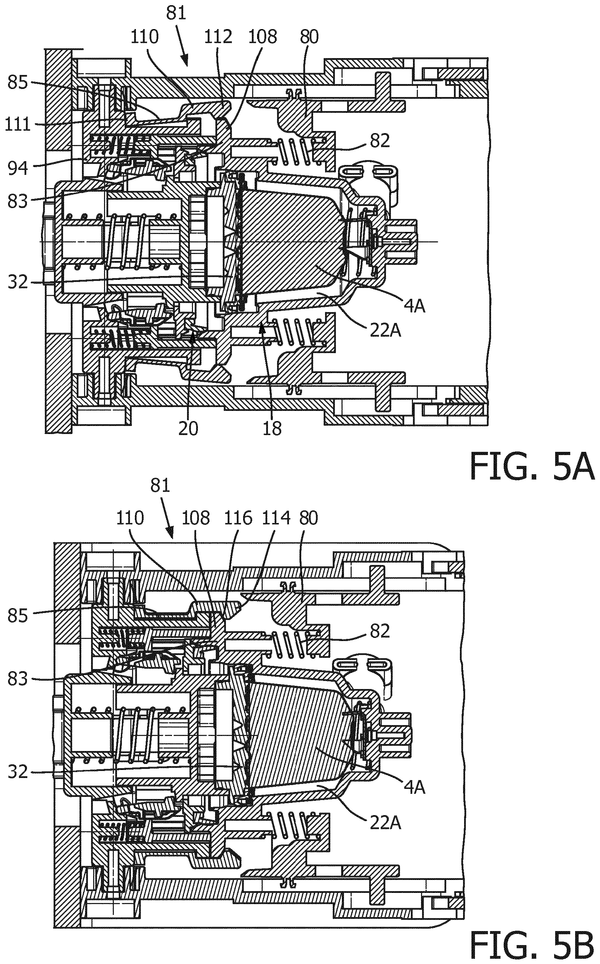

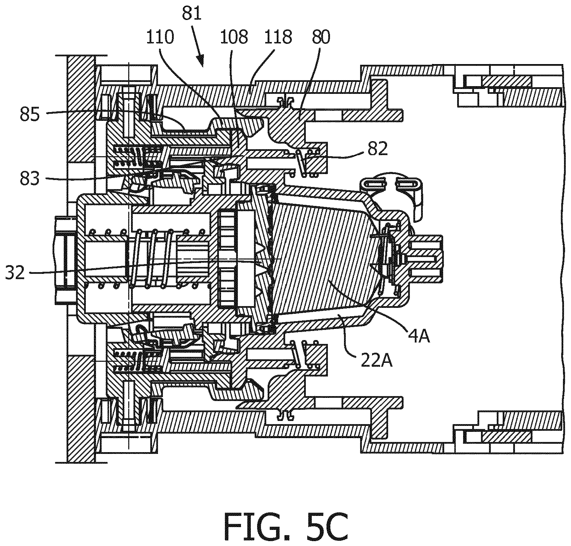

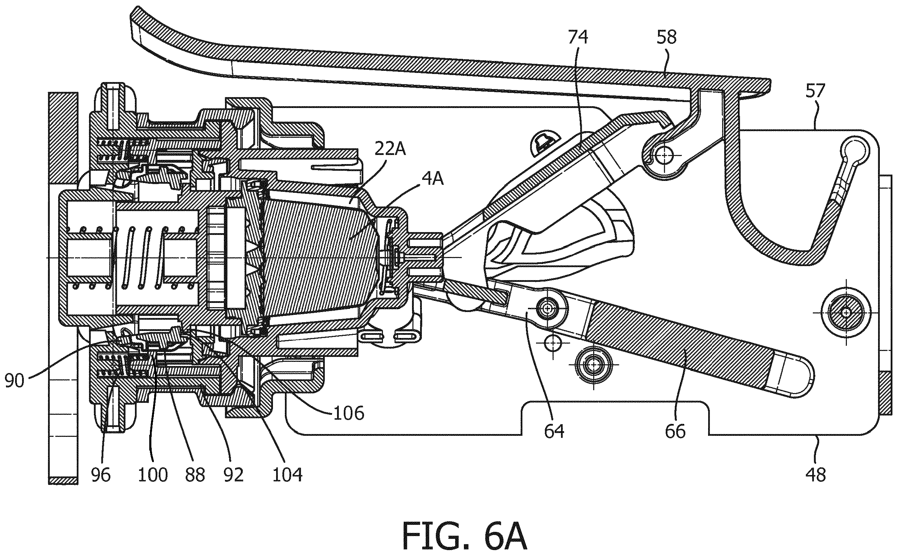

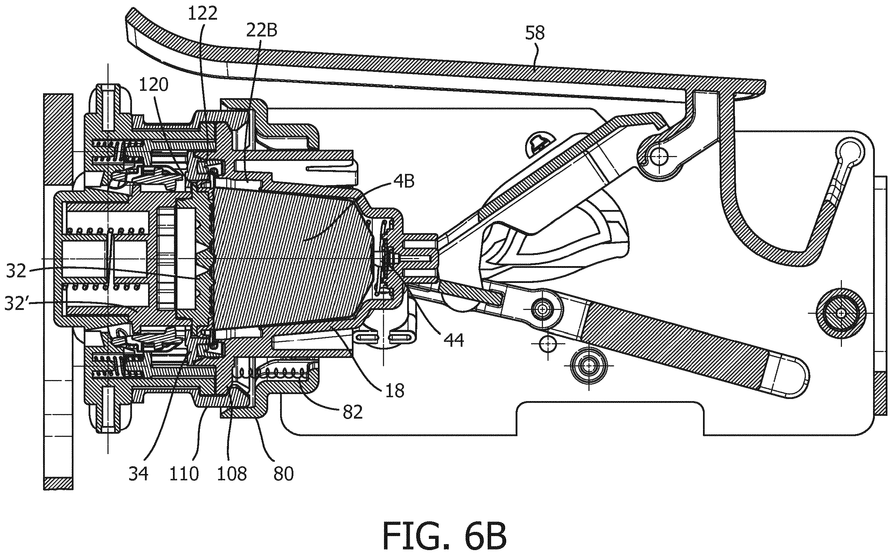

The apparatus includes a first brew chamber part 18 and a second brew chamber part 20. The first and second brew chamber parts 18, 20 can be closed against each other to form a brew chamber 22A, 22B (not shown in Figs. 1A, 1B; see e.g. Figs 5 and 6).

The first brew chamber part 18 includes a cavity 24. The cavity 24 is arranged for receiving the first or second exchangeable capsule 4A, 4B. Here the cavity 24 of the first brew chamber part 18 is a predetermined cavity 24 arranged for holding the first or second capsule 4A, 4B. Here the cavity 24 has an invariable shape for holding the first or second capsule 4A, 4B. Here the first brew chamber part 18 is arranged for holding the first or second capsule 4A, 4B without changing a configuration of the first brew chamber part 18. In this example the first brew chamber part 18 is a monolithic part. In this example the first brew chamber part 18 includes a first abutment surface 26. The first abutment surface may be positioned inside the cavity 24. Here the first abutment surface 26 is a first generally annular abutment surface. The first generally annular abutment surface 26 can be continuously annular, or it may be interrupted annular, such as comprising at least one, optionally a plurality of segments along an annulus. The first abutment surface 26 may for example take the shape of one or more, e.g. arched, ridges which protrude into cavity 24. Here the first abutment surface 26 provides the cavity 24 with a stepped shape. In this example the first brew chamber part 18 includes a second abutment surface 28. The second abutment surface may be positioned near the open end of the cavity 24. Here the second abutment surface 28 is a second generally annular abutment surface. The second generally annular abutment surface 28 can be continuously annular, or it may be interrupted annular, such as comprising a plurality of segments along an annulus. The second abutment surface 28 may for example take the shape of one or more, e.g. arched, ridges. It will be appreciated that the first abutment surface 26 and the second abutment surface 28 may be spaced at a mutual distance especially in an axial direction of the first brew chamber part 18. The first abutment surface 26 and the second abutment surface may be positioned at a fixed spacing: they may be immobile relative to each other. The first abutment surface 26 and the second abutment surface 28 may be immobile relative to each other. Here, the first brew chamber part 18 includes an ejector 38. In this example the ejector 38 includes a conical ring and/or a resilient element 42, here a helical spring. The first brew chamber part 18 may include piercing means 44 for piercing the bottom of the capsule. Here the piercing means includes a plurality of knives, such as three knives.

The second brew chamber part 20 includes an extraction plate 30. In this example, the extraction plate 30 includes a central portion 32 and a peripheral portion 34. The central portion 32 is movable relative to the peripheral portion 34. Here the central portion 32 is movable in an axial direction of the second brew chamber part 20.

The system 1 as described thus far can be used for preparing a beverage as follows. Further features of the system 1 will be explained along the way.

In the example of Figs. 1A and 1B the apparatus 2 is in a state ready for receiving a capsule, i.e. an open or loading position. In Figs. 1A and 1B the capsule 4A, 4B has just been inserted into the cavity 24 of the first brew chamber part 18. The first brew chamber part 18 here is in an inclined position. It may be provided in any position where introduction of the capsules is possible. The open end of the cavity 24 may point substantially upwards.

As shown in Fig. 1A, the first exchangeable capsule 4A can fall into the cavity 24 especially under the influence of gravity. Herein the rim 14A of the first exchangeable capsule 4A is guided by an inner surface 36 of the first brew chamber part 18. The bottom 8A of the first exchangeable capsule 4A lowers into the cavity 24, and here until it abuts against the ejector 38. Here the bottom 8A of the first exchangeable capsule 4A centers on the ejector 38. It will be appreciated that the rim 14A of the first exchangeable capsule 4A is positioned between the first abutment surface 26 and the second abutment surface 28. The bottom 8A of the first exchangeable capsule 4A is not yet pierced in this state.

As shown in Fig. 1B, the second exchangeable capsule 4B can also fall into the cavity 24 especially under the influence of gravity. Herein the circumferential wall 10B of the second exchangeable capsule 4B is guided by an inner surface 46 of the first brew chamber part 18. The bottom 8B of the second exchangeable capsule 4B lowers into the cavity 24, and here until it abuts against the ejector 38. Here the bottom 8B of the second exchangeable capsule 4B centers on the ejector 38. It will be appreciated that the rim 14B of the second exchangeable capsule 4B is positioned beyond the second abutment surface 28 when seen from the piercing means 44. The bottom 8B of the second exchangeable capsule 4B is not yet pierced in this state.

It has to be mentioned that also capsules having no rim or similar projection might be used with the apparatus and system according to the invention.

Once the capsule 4A, 4B is inserted into the cavity 24 as shown in Figs. 1A and 1B, the first brew chamber part 18 can be moved towards the second brew chamber part 20 for closing the brew chamber around the capsule 4A, 4B. The first brew chamber part 18 is guided in a frame 48 of the apparatus.

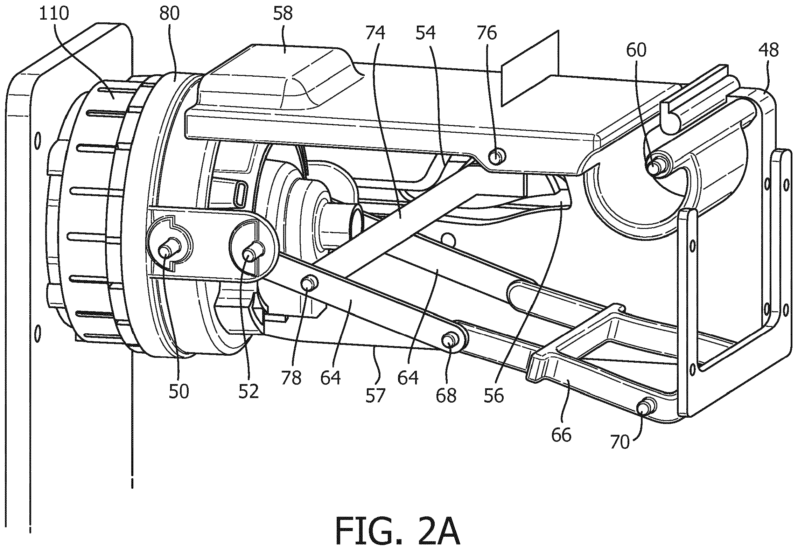

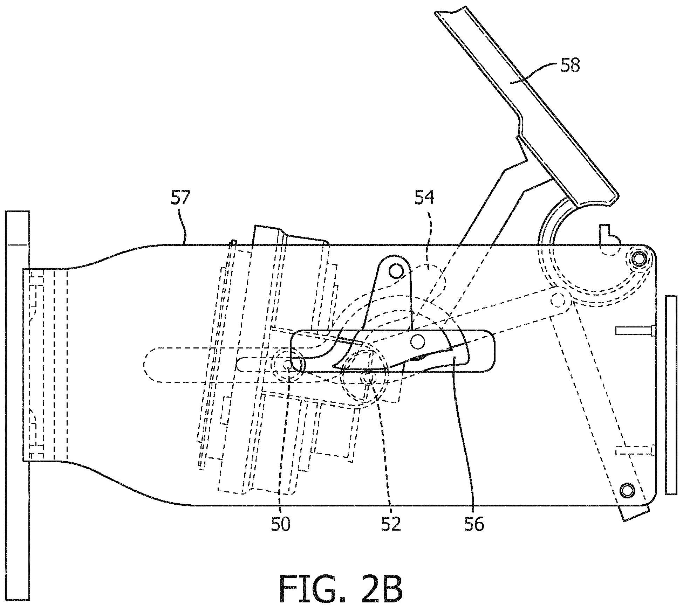

In this example the first brew chamber part 18 includes first bosses 50 and second bosses 52 as shown in Figs. 2A and 2B. The first bosses 50 are guided in a first groove 54 of the frame 48. The second bosses 52 are guided in a second groove 56 of the frame 48. It will be appreciated that the bosses 50, 52 and grooves 54, 56 determine the path that will be followed by the first brew chamber part 18 during its movement. Here the first groove 54 and the second groove 56 are provided in a side wall 57 of the frame 48. The first groove 54 may extend into the side wall 57 to a first depth. The second groove 56 may extend into the side wall to a second depth. The second depth may be larger than the first depth. The first boss 50 may have a larger diameter than the second boss 52, or vice versa. The first groove 54 may have a larger width than the second groove 56, or vice versa. The width of the first groove 54 corresponds to the diameter of the first boss 50. The width of the second groove 56 corresponds to the width of the second boss 52. It will be appreciated that the first groove 54 extends along a different trajectory than the second groove 56. The different widths and/or depths of the grooves allow the first and second bosses 50, 52 to follow different trajectories. This construction allows a very compact construction for guiding the first and second bosses 50, 52.

The apparatus 2 may include a lever 58. The lever can especially be actuated manually by a user. The lever is pivotally connected to the frame 48 around a lever axis 60. The first brew chamber part 18 is connected to the frame 48 via a knee joint 62. The knee joint 62 may include a push rod 64 and a crank 66. The push rod 64 may be pivotally connected to the crank 66 at a knee axis 68. The crank 66 may be pivotally connected to the frame 48 at a crank axis 70. The lever 58 may be connected to the knee joint 62 for actuating the first brew chamber part 18 in motion. Here the lever 58 may be connected to the knee joint 62 through a lever link 74. The lever link 74 may be pivotally connected to the lever 58 at a lever link axis 76. The lever link 74 may be pivotally connected to the push rod 64 at a knee link axis 78.

As shown with Figs. 5 the system 1 and apparatus 2 comprises an arresting mechanism 81 for arresting the first brew chamber part 18 and the second brew chamber part 20 relative to each other in their closed position. The arresting mechanism comprises a latching member 83 arranged at the first brew chamber part 18 and a counter-latching member 85 arranged at the second brew chamber part 20. These members 83, 85 may also be arranged vice versa

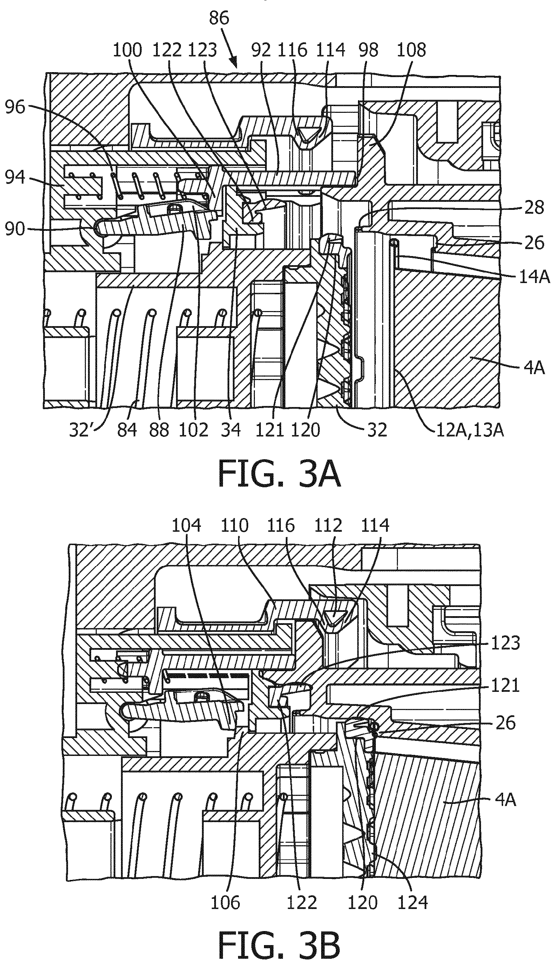

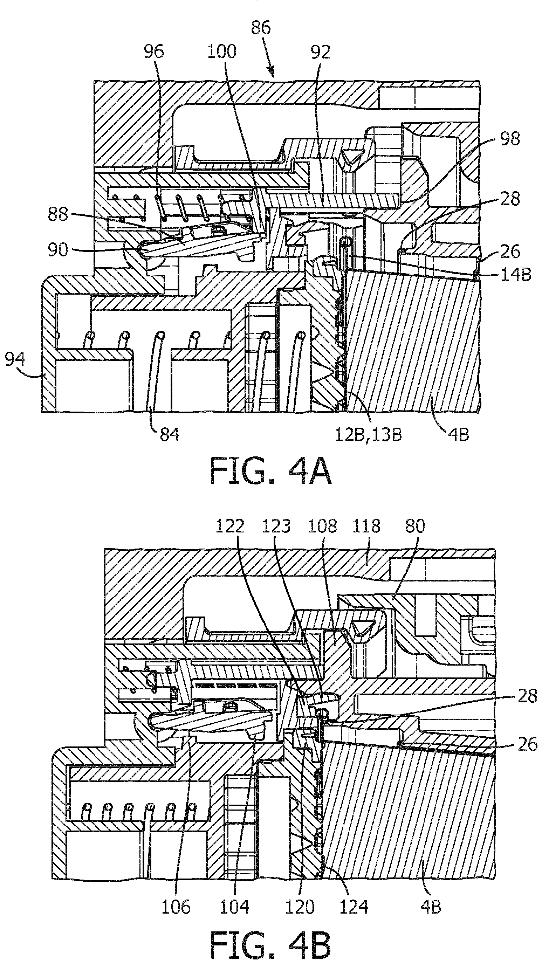

The latching member 83 and the counter-latching member 85 are movable relative to each other between a latching position (see e.g. Fig. 5B) and an un-latching position (see e.g. Fig. 3A and 4A).

The arresting mechanism 81 further comprises an arresting part 80 being movable relative to the latching member 83 and the counter-latching member 85 between an arresting position (see e.g. Fig. 5C) and an un-arresting position (see e.g. Fig. 5A and 5B), wherein in the arresting position the arresting part 80 arrests and/or actuates an engagement of the latching member 83 and the counter-latching member 85 in their latching position, thereby arresting the first and second brew chamber parts 18, 20 relative to each other, and in the un-arresting position un-arrests and/or un-actuates an engagement of the latching member 83 and the counter-latching member 85 in their un-latching position, thereby un-arresting the first and second brew chamber parts 18, 20 relative to each other. As can be seen in Fig. 2A the arresting part 80 may be directly coupled to the activation means 58, 62, 64, 66, 70, 74, for being moved by the latter.

The arresting part 80 may be arranged surrounding the first brew chamber part 18. In detail the arresting part 80 may be provided as an arresting ring 80 arranged surrounding at least partly the first brew chamber part and/or the second brew chamber part. The arresting part 80 may be axially movable relative to the first brew chamber part 18. Here, the arresting part 80 is guided by an external surface of the first brew chamber part 18. The arresting part may be connected to the first brew chamber part via one or more resilient elements 82, here helical springs. Here the push rod 64 is pivotally connected to the arresting part 80 at a push rod axis 72. Hence, here the knee joint 62 is indirectly connected to the first brew chamber part 18, viz. via the arresting part 80 and one or more resilient elements 82. The function of the arresting part will be set out below.

When the activation means are activated, i.e. here when the lever 58 is moved in a downward direction, here the knee joint 62 will push the first brew chamber part 18 towards the second brew chamber part 20. Simultaneously, due to the shape of the first and second grooves 54, 56, the first brew chamber part 18 will be rotated from the upwards inclined orientation into a an aligned orientation in which an axial direction of the first brew chamber part 18 is aligned with an axial direction of the second brew chamber part 20.

As mentioned above, the apparatus 2 is arranged for selectively cooperating with either the first exchangeable capsule 4A or the second exchangeable capsule 4B. Here, the system 1 is arranged for automatically adjusting the brew chamber depending on whether the first or the second exchangeable capsule has been inserted. This provides the advantage that no user input is required for selecting proper handling of the first or second exchangeable capsule. Hence, the risk of errors is greatly reduced.

As shown in Figs. 3 and mentioned before, the second brew chamber part 20 includes an extraction plate 30 with a central portion 32 and a peripheral portion 34. Here the central portion 32 is movable especially in an axial direction of the second brew chamber part 20. The central portion 32 in this example includes a shaft 32' axially slidably movable with respect to the frame 48. The central portion 32 may be connected to the second brew chamber portion and especially to the frame 48 via a resilient member 84, here a helical spring. The resilient member 84 biases the central portion into a ready position in Figs. 1A and 1B. The ready position is an extended position in this example. The central portion 32 can be positioned in a first brewing position for cooperating with the first exchangeable capsule 4A. The central portion can be positioned in a second brewing position for cooperating with the second exchangeable capsule 4B. The central portion 32 may be biased to the ready position and preferably biased in the first position and/or biased in the second position. As mentioned for biasing, i.e. especially pre-tensioning a resilient member or similar tensioning element can be provided.

In this example, the system 1 includes a locking mechanism 86 arranged for locking the central portion 32 in or near the first brewing position when the cavity 24 holds the first exchangeable capsule 4A. Also locking the central portion in a position nearer the first position than the second position may be covered by this definition.

In general and as already explained, the system and especially the second exchangeable capsule 4B may be arranged for moving the central portion 32 from the first position to the second position. It is also possible that the system is arranged such that, while closing the first brew chamber part 18 against the second brew chamber part 20, when the cavity 24 holds the second exchangeable capsule 4B, the central portion 32 is pushed beyond the locking mechanism 86 by the second exchangeable capsule 4B before the locking mechanism 86 is actuated by the first brew chamber part 18. Further it holds that system may be arranged such that, while closing the first brew chamber part 18 against the second brew chamber part 20, when the cavity 24 holds the first exchangeable capsule 4A, the locking mechanism 86 is actuated by the first brew chamber part 18 before the central portion 32 is pushed beyond the locking mechanism by the first exchangeable capsule 4A.

With regard the brewing position of the capsule 4A, 4B it may hold that the peripheral portion 34 is arranged to abut against the second exit face 12B when the cavity 24 holds the second exchangeable capsule 4B while brewing. Also the peripheral portion 34 may be arranged to abut against the first brew chamber part 18 when the cavity holds the first exchangeable capsule 4A while brewing. Further it may be possible that the central portion 32 is arranged to abut against the second exit face 12B when the cavity 24 holds the second exchangeable capsule 4B while brewing and/or also may be arranged to abut against the first exit face 12A of the first exchangeable capsule 4A when the cavity holds the first exchangeable capsule 4A while brewing.

The locking mechanism 86 may include a locker 88. Here the locker 88 is designed as a pivotable finger, pivotable around a pivoting axis 90. The locker 88 may be biased into a position pivoted away from the shaft 32', especially in an unlocking position. The locker could also be biased into any other suitable position. The locking mechanism 86 further may include a pusher 92. The pusher may be slidably guided in a body 94 of the second brew part 20. The pusher 92 may be connected to the body 94 via a resilient member 96, here a helical spring. The resilient member 96 biases the pusher in an extended position and especially towards an actuator of the first brew chamber part. The first brew chamber part 18 may include such an actuator 98. Here the actuator is formed by a frontal surface of the first brew chamber part 18. The actuator 98 may be arranged in such a way that, seen in a direction towards the second brew chamber part 22, that, when the cavity 24 holds the first exchangeable capsule 4A, the outermost part of the first exchangeable capsule 4A is positioned rearwardly relative to the actuator 98 and, when the cavity 24 holds the second exchangeable capsule 4B, the outermost part of the second exchangeable capsule is positioned forwardly relative to the actuator 98, so that the locking mechanism 86 is actuated by the first brew chamber part 18 before the central portion 32 is pushed beyond the locking mechanism 86 by the first exchangeable capsule or the locking mechanism 86 is actuated by the first brew chamber part 18 after the central portion is pushed beyond the locking mechanism by the second exchangeable capsule respectively.

The locking mechanism 86, optionally including the locker, and especially the pivotable finger, is arranged for locking the central portion in the first position, wherein the locker may be activated by the activator preferably during the movement of the first brew chamber part.

In principle the locking mechanism is arranged for locking the central portion in the first position, when the cavity holds the first exchangeable capsule. Further the locking mechanisms may be arranged for preventing the central portion being locked in the first position when the cavity holds the second exchangeable capsule.

Figs. 3A and 3B show functioning of the locking mechanism 86 when the cavity 24 holds the first exchangeable capsule 4A. In this example, an outermost part of the first exchangeable capsule 4A, here formed by the exit face 12A, exit area 13A and/or rim 14A, is positioned rearwardly, i.e. more towards the piercing means 44, relative to the actuator 98. As a result, when advancing the first exchangeable capsule 4A towards the second brew chamber part 20, the actuator 98 will touch the pusher 92 before the outermost part of the first exchangeable capsule 4A will touch the central portion 32. The pusher may be pushed against a biasing force of a resilient member 96. A lip 100 of the pusher 92 may slide along a sloping surface 102 of the locker 88, causing the locker 88 to translate and especially pivot towards the locking position and here towards shaft 32'. As a result, locking is engaged, and especially here a thumb 104 of the locker 88 may be placed in a path of movement of part 106 of the central portion 32 (see Fig. 3B). When the first exchangeable capsule 4A is advanced further towards the second brew chamber part 20 the first exchangeable capsule 4A will abut against the central portion 32. This can cause the central portion to be pushed against the biasing force of the resilient member 84. The especially pivoted locker 88 prevents travel of the central portion beyond a position where the part 106 abuts against the thumb 104. This is herein defined as the first (brewing) position. Hence, the first exchangeable capsule 4A is arranged for moving the central portion 32 from the ready position to the first brewing position. The first exchangeable capsule 4A is held between the first and second brew chamber parts 18, 20 while brewing, wherein the central portion 32 is in the first brewing position. This is defined as to be the brewing position.

Figs. 4A and 4B show functioning of the locking mechanism 86 when the cavity 24 holds the second exchangeable capsule 4B. In this example, an outermost part of the second exchangeable capsule 4B, here formed by the exit face 12B, exit area 13B and/or rim 14B, is positioned forwardly, i.e. more towards the second brew chamber part 20, relative to the actuator 98. It has to be mentioned that the apparatus and especially the cavity can be arranged such that, when the cavity holds the first exchangeable capsule the first exit face is recessed into the cavity further than the second exit face when the cavity holds the second exchangeable capsule.

As a result, when advancing the second exchangeable capsule 4B towards the second brew chamber part 20, the outermost part of the second exchangeable capsule 4B may abut against the central portion 32 before the actuator 98 will touch the pusher 92. The central portion 32 may be pushed against the biasing force of the resilient member 84 while the locker 88 is still in the unlocking position and especially pivoted away from the shaft 32'. As a result, the part 106 passed underneath the thumb 104. Only after the part 106 has passed the thumb 104 the pusher is pushed against the biasing force of the resilient member 96 by the actuator 98. The lip 100 of the pusher 92 will still slide along the sloping surface 102 of the locker 88, causing the locker 88 to pivot towards the shaft 32'. However, the part 106 has already passed the thumb 104 at that moment. In this example, the second exchangeable capsule 4B pushes the central portion 32 in abutment with the body 94. This is herein defined as the second (brewing) position. Hence, the second exchangeable capsule 4B is arranged for moving the central portion 32 from the ready position to the second brewing position. The second exchangeable capsule 4B is held between the first and second brew chamber parts 18, 20 while brewing, wherein the central portion 32 is in the second brewing position.

Thus, the locking mechanism 86 is arranged for locking the central portion 32 in the first extraction position when the cavity 24 holds the first exchangeable capsule 4A. It is noted that the locking may be single-sided, viz. the locking mechanism may prevent the central portion 32 from being moved beyond the first extraction position when the cavity 24 holds the first exchangeable capsule 4A. However movement of the central portion 32 from the first extraction position to the ready position may be not prevented. The locking mechanism 86 may be arranged for preventing the central portion 32 being locked in or near the first brewing position when the second exchangeable capsule 4B is included in the brew chamber. The locking mechanism 86 may be arranged for allowing the central portion 32 being moved into the second brewing position when the second exchangeable capsule is included in the brew chamber.

When comparing Figs. 3A and 4A it will be appreciated that while advancing the first brew chamber part 18 towards the second brew chamber part 20 here the first exchangeable capsule 4A is recessed further into the first brew chamber part than the second exchangeable capsule 4B. Then the first exit face 12A, exit area 13A and/or rim 14A is recessed further into the first brew chamber part 18 than the second exit face 12B, exit area 13B and/or rim 14B.

When comparing Figs. 3B and 4B it will be appreciated that when the brew chamber holds the first exchangeable capsule 4A, here the central portion 32 extends into the cavity 24. Especially the central portion 32 extends into the first brew chamber part 18 beyond a position where the exit face 12B, exit area 13B and/or rim 14B of the second exchangeable capsule 4B would have been, had the second exchangeable capsule been included in the first brew chamber part 18.

In the light of the above it can be said that the locking mechanism 86 may be arranged for preventing the central portion 32 being locked in the first position when the cavity 24 holds the second exchangeable capsule. Further it may be arranged for allowing the central portion 32 being moved into the second position when the cavity holds the second exchangeable capsule. Especially in this regard, the central portion 32 may be movable from a ready position to a second position when the cavity 24 holds the second exchangeable capsule 4B and/or may be movable from a ready position to the first position when the cavity 24 holds the second exchangeable capsule 4B and/or the first exchangeable capsule 4A.

As mentioned above, the activation means, and here the knee joint 62 may be indirectly connected to the first brew chamber part 18, viz. via the arresting part 80 and one or more resilient elements 82.

Figs. 5A-5C demonstrate functioning of the arresting mechanism 81 and in detail of the arresting part 80. In principle the concept of this arresting mechanism 81 can be used with any kind of beverage preparation apparatus having a first brew chamber part movable relative to a second brew chamber part for providing a brew chamber a beverage preparation product can be inserted to, and especially a capsule, for brewing a beverage product. In detail the example shown may be provided such that at least one capsule can be inserted to the brew chamber, it may however also be provided such that a beverage preparation product without a capsule can be inserted to the brew chamber. These different concepts of beverage preparation are known from the art.

In Fig. 5A the first exchangeable capsule 4A abuts against the central portion 32 with the central portion in the first brewing position. The first and the second brew chamber parts 18, 20 are therefore in the closed position, being moved from their opened position which is e.g. shown with Fig. 1A or Fig. 1B. The arresting part 80 is still in the rearward position, viz. its un-arresting position. It will be appreciated that the lever 58 will not yet have reached its end position.

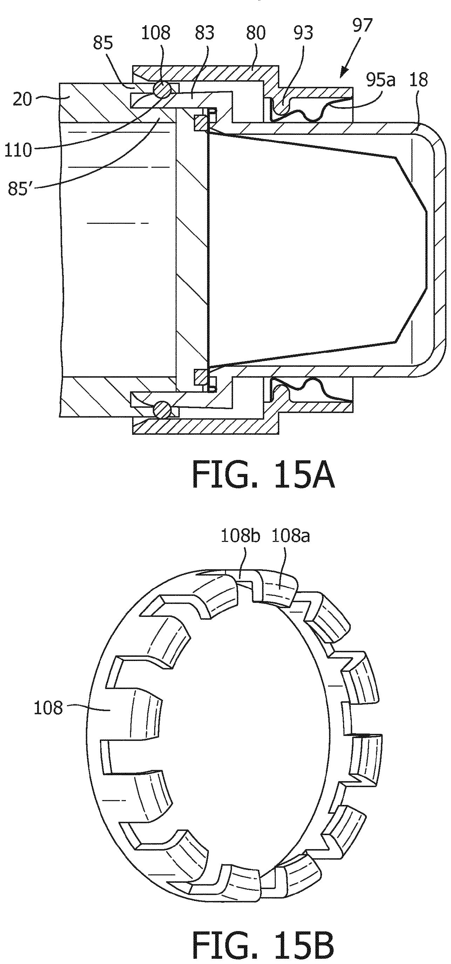

The first brew chamber part 18 comprises the latching member 83, here having a protrusion 108. Here the protrusion 108 is a substantially annular protrusion. The protrusion 108 may extend outwardly. Here the protrusion 108 forms an outermost edge of the first brew chamber part 18. Other embodiments are possible, as will be illustrated later with reference to Figures 15A to 15D.

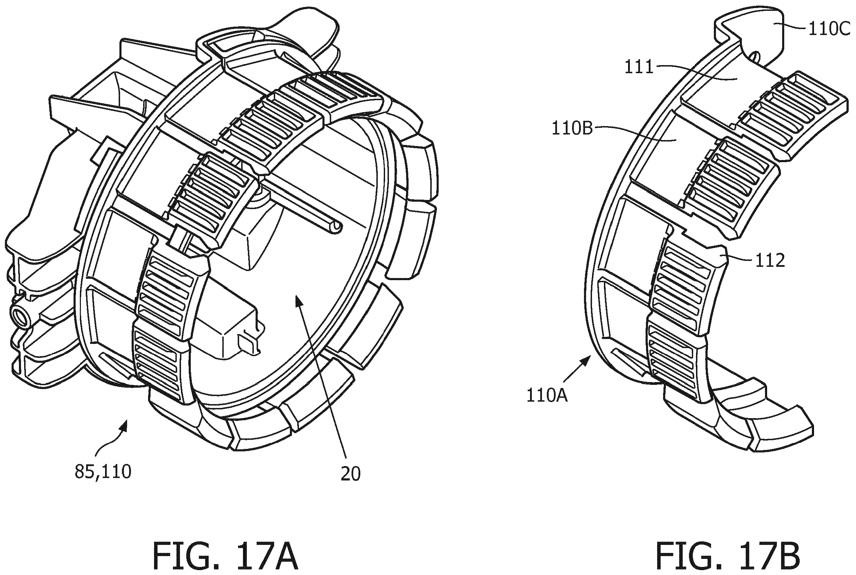

The second brew chamber part 20 here includes the counter-latching member 85, here comprising a retainer 110. Here the retainer 110 is designed as a circumferential ring of retainer lips. Other embodiments are possible, as will be illustrated later with reference to Figures 17 to 19. The retainer 110 may comprise a pivotally portion 111, here the retainer is pivotally connected to the body 94. Here the retainer 110 is resiliently pivotally connected to the body 94. The retainer 110 may include a tooth 112. The tooth here has a first inclined surface 114 and a second inclined surface 116. The latching member 83 may comprise a protrusion 108 and/or the counter-latching member 85 comprises a retainer, or vice versa, wherein especially the protrusion 108 is meshing with the retainer 110 in the latching position. A recess in the retainer may provide for allowing a meshing engagement. This recess may be terminated by at least one lip at at least one side.

When moving and especially here lowering the lever 58, the arresting part 80 will be advanced towards the second brew chamber part 20. The first brew chamber part 18 will be pushed, especially by one or more resilient elements 82, ahead of the arresting part 80 until the first brew chamber part abuts against the second brew chamber 20 part, e.g. with the capsule 4A, 4B surround by the two parts and especially clamped in between. The modulus of elasticity of the resilient element may be such that in a closing movement the activation means moves the first brew chamber part relative to the second brew chamber part in the closed position before the arresting part reaches its arresting position and especially before the arresting part moves to its arresting position. During this movement, the protrusion 108 may advance against the first inclined surface 114 of the tooth. This causes the retainer 110 to be pivoted outwardly (see Fig. 5A). Further advancing causes the protrusion 108 to pass beyond the second inclined surface 116, causing the retainer 110 to pivot inwardly (see Fig. 5B). Further moving and especially lowering of the lever 58, while the first brew chamber part abuts against the second brew chamber 20 part will cause the one or more resilient elements 82 to be compressed. As a result, the arresting part 80 will advance towards the second brew chamber part 20 in its arresting position. Fully lowering the lever 58 will cause the arresting part 80 to be interposed between the retainer 110 and a locking part 118 (see Fig. 5C). The arresting part 80 surrounding the retainer 110 prevents the retainer 110 from pivoting outwardly. In the arresting position the arresting part may be biased in direction of the first brew chamber part and especially in direction of its moving axis. Hence, the first brew chamber part is locked with respect to the second brew chamber part 20. The first brew chamber part is locked onto the second brew chamber part 20.

It has to be mentioned that the arresting part does not necessarily need to be coupled with the activation means as explained above. It might also be provided that the arresting mechanism and the arresting part, respectively can be arranged such that it can be moved between its arresting positon and its un-arresting position by an individual activation mechanism, e.g. a slider, a thread, a lever, a motor etc., especially activateable by the user. It might also be possible to provide sensor means to detect an activation status, e.g. the closed position of the brew chamber parts, to active the activation mechanism of the arresting mechanism and the arresting part, respectively.

As explained, the arresting part 80 is movable relative to the latching member 83 and the counter-latching member 85 between an arresting position and an un-arresting position. As can be seen in Fig. 5C in the arresting position the arresting part 80 arrests and/or actuates an engagement of the latching member and the counter-latching member in their latching position, thereby arresting the first and second brew chamber parts relative to each other. In the un-arresting position it un-arrests and/or un-actuates the engagement of the latching member and the counter-latching member in their un-latching position, thereby un-arresting the first and second brew chamber parts relative to each other.

It is also shown that possibly the latching member 83 and the counter-latching member 85 are arranged as to be movable relative to each other between the latching position and the un-latching position together with the first brew chamber part 18 and the second brew chamber part 20, respectively, especially when the arresting part is not in its arresting position.

As can be seen in Fig. 5 the latching member 83 and/or the counter-latching member 85 may be integrally arranged at a body 94 of the first brew chamber part 18 and the second brew chamber part 20, respectively, or vice versa.

As the arresting part 80 is arranged surrounding the first brew chamber part 18 and as it further may be arranged to be guided by an external surface of the first brew chamber part reliable movement is archived with a very reduced required space.

The apparatus can include a fluid supply system for supplying a fluid, e.g. a liquid, such as hot water under pressure, to the first brew chamber part 18. When the brew chamber is pressurized with the fluid for brewing a beverage, the first and second brew chamber parts 18, 20 will be pushed away from each other by the fluid pressure. The retainer 110 and arresting part 80, and optionally the locking part 118, will bear all, or part of, the force exerted by the fluid pressure. The arresting part 80 interposed between the retainer 110 and the locking part 118 increases mechanical stability. The arresting part 80 may be arranged in the arresting position interposed between the locking part and at least one of the latching member, the counter-latching member and the retainer. The arresting part 80 does not have to bear all forces exerted onto it by the retainer 110, since it can abut against the locking part 118 and transmit at least part of the forces to the locking part 118. The locking part 118 can be immobile, and hence can easily be reinforced. Since the first brew chamber part is locked onto the second brew chamber part 20 the frame 48 and the actuation mechanism, e.g. the knee joint, do not have to bear this force, or at least a smaller part thereof. Hence the frame and/or the actuation mechanism can be designed weaker and/or cheaper.

Although the functioning of the arresting part 80 has been shown in Figs. 5A-5C with respect to the first exchangeable capsule 4A, it will be appreciated that the arresting part 80 can function identically with respect to the second exchangeable capsule 4B or with a brew chamber arranged for entering a beverage preparation product without a capsule.

Fig. 6A shows the first exchangeable capsule 4A in the brew chamber during extraction. Fig. 6B shows the second exchangeable capsule 4B in the brew chamber during extraction.

The piercing member 44 may be arranged for piercing the bottom 8A, 8B of the capsule 4A, 4B. As can also be seen in Figs. 5A-5C, in this example the piercing member 44 does not pierce the bottom 8A, 8B until the exit face 12A, 12B of the capsule 4A, 4B abuts against the central portion 32 in the first or second brewing position. Thereto, stiffness of the resilient element 42 and the resilient member 84 can be chosen. In this example, the stiffness of the resilient element 42 is chosen to be larger than the stiffness of the resilient member 84. However, it will be appreciated that it is also possible that the stiffness of the resilient element 42 is equal to the stiffness of the resilient member 84 or that the stiffness of the resilient element 42 is smaller than the stiffness of the resilient member 84.

Once the capsule 4A, 4B is included in the brew chamber, and the bottom 8A, 8B has been pierced, a fluid, in this example hot water under pressure, can be supplied to the brew chamber. Therefore it is desired that the brew chamber is leak tight. Thereto the central portion 32 may be provided with a first sealing member 120. The peripheral portion 34 may be provided with a second sealing member 122. The beverage preparation apparatus 2 is arranged for preparing a quantity of a beverage, suitable for consumption, using either a first exchangeable capsule 4A or a second exchangeable capsule 4B. The quantity can be a predetermined quantity. The quantity can also be a user selectable, user settable, or user programmable quantity.

Referring to Fig. 3B sealing in view of the first exchangeable capsule 4A is described. The first sealing member 120 may be arranged for providing a fluid sealing engagement between the central portion 32 and the first brew chamber 18 part when forming the brew chamber for holding the first exchangeable capsule 4A. In this example, the first sealing member 120 abuts against the first brew chamber part 18 when the first exchangeable capsule 4A is included in the brew chamber. This provides a seal for water being present in the cavity 24 outside the capsule 4A. This way, brewing fluid injected into the brew chamber 22A is prevented from bypassing around the outside of the capsule 4A. In the example of Fig. 3B the first sealing member 120 may include a resilient lip 121. The resilient lip 121 may be arranged to provide a self-reinforcing sealing engagement between the central portion 32 and the first brew chamber part 18 under the effect of fluid pressure in the brew chamber. In this example the first sealing member 120 abuts against the rim 14A of the first exchangeable capsule 4A. The rim 14A is pressed against the first sealing member 120 by the first abutment surface 26. This may provide a sealing engagement between the central portion 32 and the capsule 4A against beverage exiting the capsule 4A via the exit area 13A. It will be appreciated that here the side of the rim 14A facing away from the cup-shaped body 6A, which rim may or may not be covered by a lid, for example by a foil, is sealed against the second brew chamber part 20. Alternatively, or additionally, the side of the rim 14A facing towards the cup-shaped body 6A can be sealed against the first brew chamber part 18. Thereto an additional seal can be provided on the first brew chamber part 18, e.g. on the first abutment surface 26, and/or on the capsule 4A, e.g. on the rim 14A. It will be clear that a seal on the capsule may be additional to the seal between the first brew chamber part 18 and the second brew chamber part 20. This may reduce the sealing effort by the first sealing member 120.

Referring to Fig. 4B sealing in view of the second exchangeable capsule 4B is described. The second sealing member 122 may be arranged for providing a fluid sealing engagement between the peripheral portion 34 and the first brew chamber 18 part when forming the brew chamber for holding the second exchangeable capsule 4B. In this example, the second sealing member 122 abuts against the first brew chamber part 18 when the second exchangeable capsule 4B is included in the brew chamber. This provides a seal for water being present in the cavity 24 outside the capsule 4B. In the example of Fig. 3B the second sealing member 122 includes a resilient lip 123. The resilient lip 123 may be arranged to provide a self-reinforcing sealing engagement between the peripheral portion 34 and the first brew chamber part 18 under the effect of fluid pressure in the brew chamber. In this example the second sealing member 122 abuts against the rim 14B of the second exchangeable capsule 4B. The rim 14B is pressed against the second sealing member 122 by the second abutment surface 28. This may provide a sealing engagement between the peripheral portion 34 and the capsule 4B against beverage exiting the capsule 4B via the exit area 13B.

In Fig. 4B the first sealing member 120 provides a sealing engagement between the central portion 32 and the peripheral portion 34 when forming the brew chamber for holding the second exchangeable capsule 4B. This sealing engagement between the central portion 32 and the peripheral portion 34 can be self-reinforcing. Thereto the engagement between peripheral portion 34 and the second capsule 4B may allow brewing fluid to pass to the first sealing member 120. Hence, the first sealing member 120 provides a sealing engagement between the central portion 32 and the capsule 4B against beverage exiting the capsule 4B via the exit area 13B. It will be appreciated that here the side of the rim 14B facing away from the cup-shaped body 6B, which rim may or may not be covered by a lid, for example by a foil, is sealed against the second brew chamber part 20. Alternatively, or additionally, the side of the rim 14B facing towards the cup-shaped body 6B can be sealed against the first brew chamber part 18. Thereto an additional seal can be provided on the first brew chamber part 18, e.g. on the second abutment surface 28, and/or on the capsule 4B, e.g. on the rim 14B. It will be clear that a seal on the capsule may be additional to the seal between the first brew chamber part 18 and the second brew chamber part 20. This may reduce the sealing effort by the second sealing member 122.

When the fluid under pressure is supplied to the capsule 4A, 4B in the brew chamber, the exit area 13A, 13B may open against the extraction plate 30. The extraction plate 30 in this example includes a plurality of relief elements 124. Here the relief elements 124 are truncated pyramids. A rise in pressure inside the capsule 4A, 4B can cause the exit area 13A, 13B to tear against the relief elements allowing beverage to exit the capsule 4A, 4B.

The beverage can pass through the extraction plate 30 via apertures in the extraction plate. Next the beverage can flow to an outlet 126. From the outlet 126 the beverage can flow into a receptacle, such as a cup.

Once the beverage has been brewed, the lever 58 can be moved upwardly. This causes the arresting part 80 to be moved away from the retainer 110. Next, the first brew chamber part 18 will be moved rearwardly. The second inclined surface 116 of the retainer 110 can allow the retainer to pass the projection 108. The first brew chamber 18 part will move away from the second brew chamber part 20. The central portion 32 will return to the ready position. The bosses 50, 52 and grooves 54, 56 determine the path that will be followed by the first brew chamber part 18.

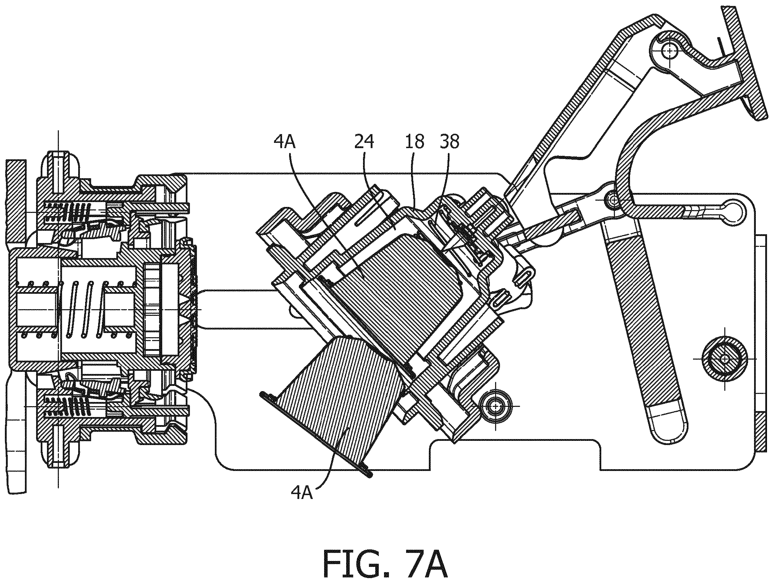

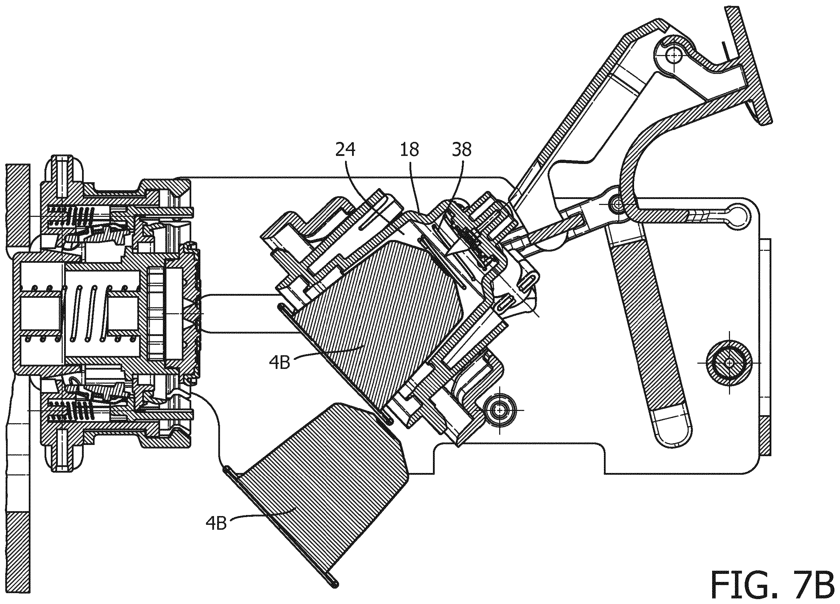

As shown in Figs. 7A and 7B the first brew chamber part will swivel downwardly. This promotes ejection of the used capsule 4A, 4B from the cavity 24 under the effect of gravity. The ejector 38 can assist in pushing the capsule 4A, 4B off the piercing member 44 and out of the cavity 24. The used capsule 4A, 4B can fall into a waste basket of the apparatus 2.

In this example the first and second exchangeable capsules 4A, 4B are designed to make a similar visual impression.

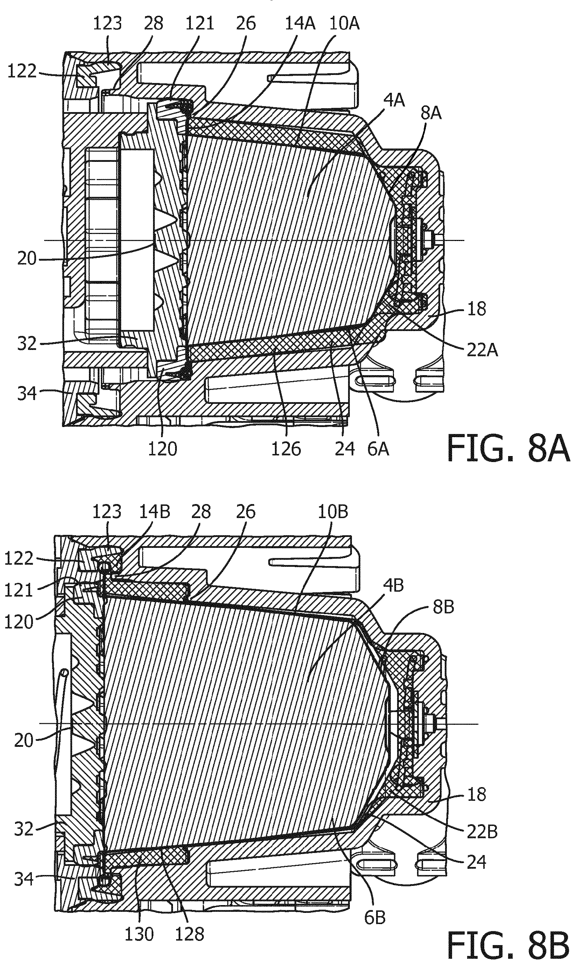

Fig. 8A shows an example of a first exchangeable capsule 4A inserted in the brew chamber 22A formed by the first brew chamber part 18 and the second brew chamber part 20. It will be appreciated that the circumferential wall 10A is narrower than the cavity 24 at that location. As a result there is a first volume 127 surrounding the first exchangeable capsule 4A inside the cavity 24.

Fig. 8B shows an example of a second exchangeable capsule 4B inserted in the brew chamber 22B formed by the first brew chamber part 18 and the second brew chamber part 20. It will be appreciated that a part 128 of the circumferential wall 10B is narrower than the cavity 24 at that location. This part 128 is formed by the part of the circumferential wall 10B extending beyond the first abutment surface 26. As a result there is a second volume 130 surrounding the second exchangeable capsule 4B inside the cavity 24.

It is noted that the first volume 127 is not occupied by the first exchangeable capsule 4A when the brew chamber holds the first exchangeable capsule 4A. However, this first volume 127 is occupied by part of the second exchangeable capsule 4B when the brew chamber holds the second exchangeable capsule 4B. The second volume 130 is not occupied by the second exchangeable capsule 4B when the brew chamber holds the second exchangeable capsule 4B. This second volume 130 is receiving the central portion 32 of the extraction plate 30 when the brew chamber holds the first exchangeable capsule 4A.

When brewing a beverage using the first exchangeable capsule 4A, the first volume 127 will fill with fluid, such as water, which fluid is not used for brewing the beverage. This fluid can be drained to the waste basket after brewing. When brewing a beverage using the second exchangeable capsule 4B, the second volume 130 will fill with fluid, such as water, which fluid is not used for brewing the beverage. This fluid can be drained to a container, e.g. the waste basket, after brewing. In this example the first volume 127 is substantially equal to the second volume 130. Hence, the volume of fluid directed to the waste basket is substantially equal when brewing a beverage using a first exchangeable capsule 4A and when brewing a beverage using a second exchangeable capsule 4B.

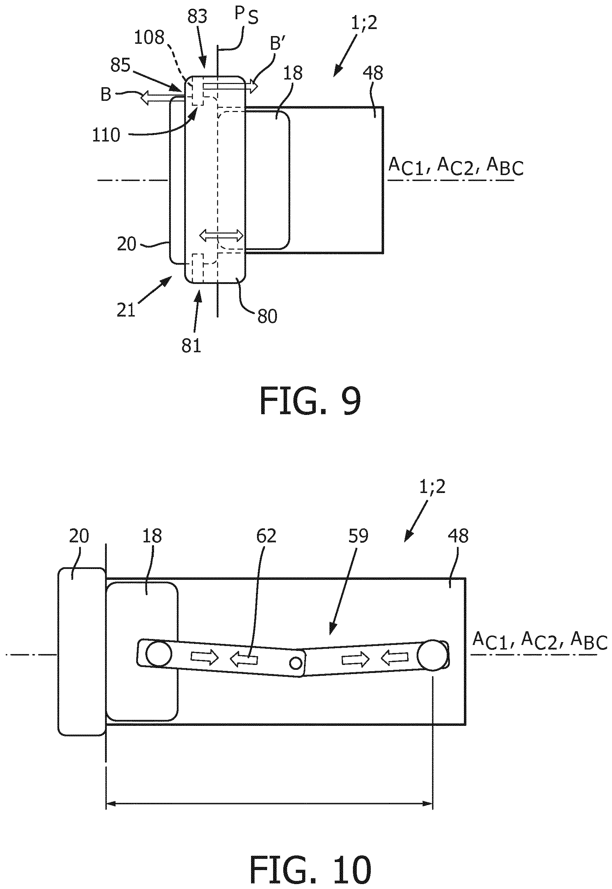

Fig. 9 discloses a schematic representation of a side view of another embodiment of the locking mechanism 81 and especially of a first brew chamber part 18 and a second brew chamber part 20 arranged in a closed position. The first brew chamber part 18 abuts against the second brew chamber part 20, wherein in this situation a capsule could be held and especially clamped in between the two parts in a brew chamber 21 provided by the first brew chamber part 18 and the second brew chamber part 20 in the closed position. Instead of a capsule the brew chamber might also be provided that a beverage preparation product can be hold in the chamber without a capsule. The two brew chamber parts 18, 20 are providing a sealing plane P_{S} for closing the brew chamber to its outer environment.

The first and second brew chamber parts 18, 20 in their closed position are arrested by an arresting mechanism 81 here schematically shown and similar to the one already described with regard to Fig. 5. The respective explanations of the before described embodiments do therefore also apply unless otherwise mentioned. This also applies for all the other embodiments, especially of the arresting mechanism described herein, and vice versa.

The arresting mechanism 81 comprises an arresting part 80 here shown in an arresting position. In the arresting position the arresting part secures the positions of the first and the second brew chamber parts 18, 20 in the closed position.

The arresting part 80 is here arranged surrounding the first brew chamber part and/or the second brew chamber part and is especially provided as an arresting ring 80. Further, the arresting part may be moveably arranged along a central axis A_{C1} of the first brew chamber part and/or along a central axis A_{C2} of the second brew chamber part and/or a brew chamber axis A_{BC}, which are here coaxially arranged. These axes may be referred to as the axis herein. In principle, the arresting part 80 may be guided by an external surface of the first brew chamber part and/or the second brew chamber part.

In this embodiment the first brew chamber part 18 comprises a latching member 83 provided with a protrusion 108. This protrusion may be arranged as an annular ring form protrusion surrounding at least partially the first brew chamber part 18. It may also be provided at the second brew chamber part 20. For arresting the brew chamber parts 18, 20 the protrusion 108 meshes with a retainer 110 here provided at a counter-latching means 85. This counter-latching means 85 is provided at the second brew chamber part 20, it may however also be provided at the first brew chamber part 18. As shown by the arrows B, the protrusion 108 and the retainer 110, which might be complementarily formed, are securing the first brew chamber part 18 and the second brew chamber part 20 relative to each other in their closed position by a relative engagement. The latching member 83 and the counter-latching member are for that reason arranged in a latching position.

The engagement of the latching member 83 and the counter-latching member 85 and their protrusion 108 and their retainer 110, respectively, may be activated and/or enforced by the arresting part 80, which may be provided such that it enhances the meshing between the protrusion 108 and the retainer 110 and the members 83, 85 respectively, and/or activates the same. With the arresting part in its arresting position according to Fig. 9, the system may be provided that departing of the first brew chamber part 18 relative to the second brew chamber part 20 especially in a moving direction along the axes Aci, A_{C2}, A_{BC} is prevented. As soon as the arresting part 80 starts moving and/or has moved to an unarresting position (not shown), and especially in a direction parallel to at least one of the axis Aci, A_{C2}, A_{BC}, departing of the two brew chamber parts 18, 20 is possible.

With this embodiment the arresting part 80 can be moved by an individual activation mechanism (not shown). This activation mechanism can e.g. be a slider, a thread, a lever, a motor etc., especially activateable by the user. However also coupling with activations means for moving the two brew chamber parts might be possible.

A detail of the embodiment of Fig. 9 is schematically shown in Fig. 10, wherein here the arresting part is not shown. With Fig. 10 a part of the activation means 59 is shown for moving the first brew chamber part 18 relative to the second brew chamber part 20. This activation means 59 preferably comprises a manual lever for activating the same (not shown in this embodiment).

Here the activation means 59 comprises a knee joint mechanism 62 connecting the first brew chamber part 18 to the frame 48 of the system 1 and the apparatus 2 respectively. By activating the knee joint mechanism 62 the first brew chamber part 18 can be moved from the closed position, which is shown in Fig. 10, to an open position. An example for an open position is shown with Fig. 1. In this open position the first brew chamber part 18 is distant from the second brew chamber part 20, wherein preferably insertion of a capsule to the apparatus and especially to a cavity of the first or second brew chamber part 18, 20 is possible.

As can be seen with Fig. 10, the knee joint mechanism in this embodiment is in the closed position of the brew chamber parts 18, 20 arranged in a stretched position. Especially it is arranged substantially aligned parallel to a central axis of the first brew chamber part A_{C1} and/or of an axis of the second brew chamber part A_{C2} and/or of a brew chamber axis A_{BC}.

It is obvious that forces impacting on the first brew chamber part are transferred to the frame 48 as normal forces with almost no bending and/or momentums acting on the respective parts. Such forces can for example result when a fluid is entered to the brew chamber during the brewing processing under pressure, thereby pressing the brew chamber parts 18, 20 apart from each other. Beside the before mentioned arresting mechanism 81, the respectively arranged knee joint mechanism 62 allows for transferring these forces to the frame 48 of the system and apparatus respectively. This allows for reducing the involved parts' dimensions. Although with this embodiment the activations means are directly coupled to one brew chamber part it is also possible to arrange the activation means such that it is coupled to the arresting part 80, wherein this arresting part may then be coupled to the brew chamber part via at least one resilient member, as e.g. described with regard to Fig. 5. For such an embodiment, then no individual activation mechanism for the arresting mechanism might be provided.

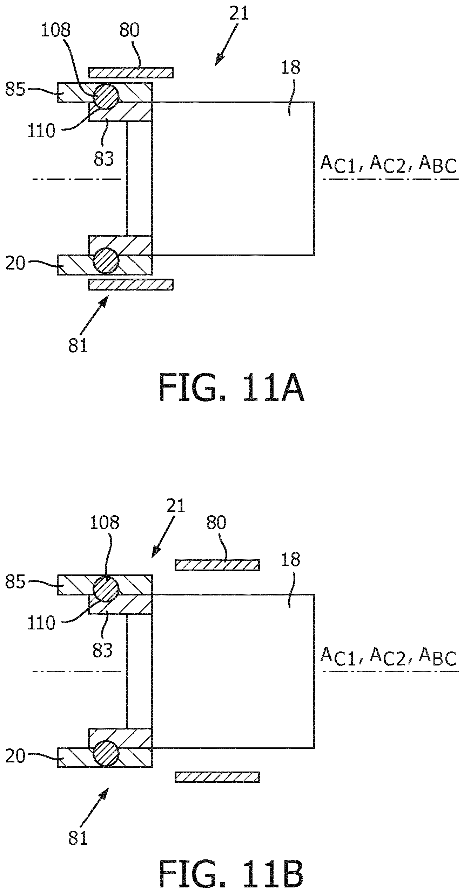

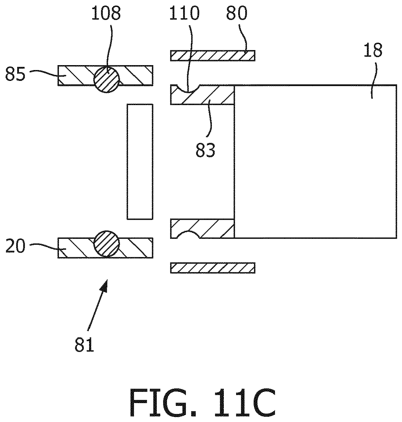

Figs. 11A-11C show another embodiment of arresting mechanism 81. Shown are a first brew chamber part 18 and a second brew chamber part 20 being in a closed position (Fig. 11A), an intermediate position (Fig. 11B) and an open position (Fig. 11C). The first and second brew chamber parts 18, 20 in their closed position are arrested by an arresting mechanism 81 here schematically shown and being similar to the one already described with regard to Fig. 5. The respective explanations of the before described embodiments do therefore also apply unless otherwise mentioned. This also applies for all the other embodiments, especially of the arresting mechanism described herein, and vice versa.

In Fig. 11A the first brew chamber part 18 and the second brew chamber part 20 are in the closed position and arrested by an arresting part 80 of the arresting mechanism 81. The first brew chamber part 18 comprises a latching member 83, wherein the second brew chamber part 20 comprises a counter-latching member 85. This could also be arranged vice versa. The latching member 83 and the counter-latching member 85 are in the closed position in relative engagement and in a latching position, such that the brew chamber parts 18, 20 cannot be separated and especially be separated by a movement along the axes A_{C1}, A_{C2}, A_{BC}.

The engagement is in this embodiment inter alia provided by a protrusion 108 provided with the counter-latching member 85 and a complementary arranged retainer 110 provided at the latching member 83. In general the protrusion and the retainer can also or in addition be arranged vice versa. The meshing between the protrusion 108 and the retainer 110 is secured by the arresting part 80 shown in its arresting position in Fig. 11A. Due to the arresting part 80 in its arresting position the latching member 83 and the counter-latching member 85 are secured in their latching position also shown with Fig. 11A.

In Fig. 11B the arresting part has been moved from its arresting position to an unarresting position. In this position the engagement of the latching member 83 and the counter-latching member 85 can be freed, especially by an axial movement of the two brew chamber parts relative to each other in opposite direction, thereby disengaging the meshing between the protrusion 108 and the retainer 110. By such the first brew chamber part 18 and the second brew chamber part 20 can be separated from each other as shown with Fig. 11C. As mentioned separation can here be performed by movement of the first and second brew chamber parts 18, 20 away from each other and especially in opposite directions along at least one of the axes A_{C1}, A_{C2}, A_{BC}.

After separation the brew chamber parts are arranged in their open position shown in Fig. 11C. In Fig. 11C (and also in Fig. 11B) the arresting part 80 is shown in its un-arrested position.

The protrusion 108 can be provided as a sphere or a ball respectively moveable within the counter-latching member 85 and/or being deformable within the member. The protrusion can also or additionally be provided at the latching member, as mentioned. The protrusion thereby may project from the counter-latching member or may be movable and/or deformable between a projecting position and a retracted position. As soon as the arresting part 80 is in the arresting position, the sphere 108 here projects in direction of the retainer 110 thereby engaging with the same and arresting the first brew chamber part 18 relative to the second brew chamber part 20. The projection is thereby secured and/or activated and kept by the arresting part during its movement from the un-arresting position to the arresting position and in his arresting position, respectively.

As soon as the arresting part 80 moves and/or is moved from the arresting position (Fig. 11A) to the unarresting position (Figs. 11B und 11C), the sphere or protrusion 108, can move out of its projecting position and meshing with the retainer 110, respectively, so that the engagement between the latching member 83 and the counter-latching member 85 is freed. In this unlatching position the first brew chamber part 18 and the second brew chamber part 20 can be moved from the closed position to the open position (as shown with Fig. 11C).

As shown the moving first brew chamber part 18 is touching the second brew chamber part so that e.g. a beverage preparation product can be sandwiched between the two parts 18, 20. As soon as the arresting part 80 is moved from its arresting position to the unarresting position (Fig. 11B), the protrusion 108, here provided as one or multiple spheres, is able to move outside to disengage the meshing.

In general, the timing of the brew chamber parts reaching the closed position and of arresting the chamber parts by the arresting mechanism is important. The same applies for the timing of leaving of the brew chamber parts of the closed position and un-arresting the same. It may be provided, like shown here, that when the brew chamber 21 is getting closed by movement of the first and second brew chamber parts 18, 20 relative to each other and abutment of the same relative to each other, especially with clamping the beverage preparation product in-between, that the latching member 83 and the counter-latching member 85 are also engaging with each other and especially at the same time. At this time the protrusion 108 may mesh with the retainer 110. After that the arresting part may be moved from the unarresting position to the arresting position or at least reach the arresting position. It can of course start moving beforehand, however not reaching the arresting position before the members reach their latching position.

Such a timed and especially "two-step movement" between the arresting part and the first and second brew chamber part and the latching and counter-latching members, respectively, is especially needed to achieve a reliable movement sequence for closing and opening of the brew chamber.

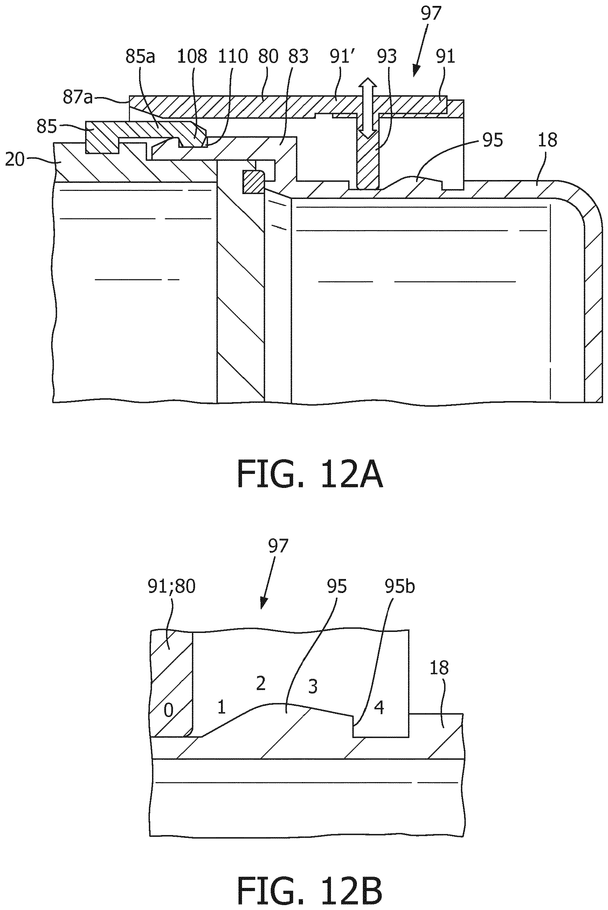

A possible embodiment, especially to achieve the before mentioned right timing, is shown with Figs. 12A and 12B. Here the first and second brew chamber parts 18, 20 are in their closed position and are arrested by an arresting mechanism 81 here schematically shown and similar to the one already described with regard to Fig. 5. The respective explanations of the before described embodiments do therefore also apply unless otherwise mentioned. This also applies for all the other embodiments, especially of the arresting mechanism described herein, and vice versa.

The first brew chamber part 18 comprises a latching member 83 and the second brew chamber part comprises a counter-latching member 85. Of course the arrangement could be vice versa as well.

The latching member 83 here comprises a retainer 110 meshing with a protrusion 108 of the counter-latching member 85. Here the protrusion 108 comprises a pivotable arm having a projection being arranged complementary to the retainer 110 to provide a meshing engagement. The arresting part 80 in its arresting position is securing this meshing by preventing pivoting of the pivotable portion 85A and the protrusion, respectively, out of this engagement.

In general the arresting part 80 can be arranged with a pretensioning surface 87A and especially an inclined pretensioning surface actively bringing the latching member 83 and the counter-latching member 85 and their respective protrusion 108 and retainer 110, respectively, into meshing engagement when the arresting part 80 is moved from the unarresting position (not shown) to the arresting position (as shown with Fig. 12A). It is possible to provide the arresting mechanism in such a way that the meshing is activated by the movement of the arresting part (e.g. the arresting part forces the members in engagement, and especially the protrusion into engagement with the retainer) or that the meshing is just enforced (by further enhancing the engagement, e.g. by further pressing the protrusion in to the retainer) or secured (e.g. by simply preventing disengagement of the members, and especially of the protrusion and the retainer).

With the embodiment of Fig. 12A, it can be seen that the protrusion 108 and the pivotable portion 85A respectively are provided as separate portions attached to the second brew chamber part. As mentioned before, also such an arrangement is covered by the wording of an "integral arrangement" of the latching member and counter-latching member at the first and/or second brew chamber part respectively.

To provide a timed movement of the arresting part 80 relative to the relative movement of the brew chamber parts 18, 20, the arresting part 80 may be provided with a snapping mechanism 97, especially comprising an activation cam 93 and a guiding cam 95. The activation cam 93 and the guiding cam 95 are providing a snapping mechanism in such a way that the activation cam 93 can pass the guiding cam 95 as soon as a specific threshold force has been overcome. This threshold force may be initiated by the activation means (not shown here). Especially when the activation means are coupled to one of the brew chamber parts, here e.g. the first brew chamber part via the arresting part 80, this threshold force can be directly applied on the snapping mechanism while moving the first brew chamber part (together with the arresting part) towards the second brew chamber part. In the unarresting position (not shown) the activation cam 93 abuts against the guiding cam 95 (in position 4 as indicated with Fig. 12B and especially at an abutment face 95b thereof). In this position the movement of the arresting part 80 will also move the first brew chamber part 18 relative to the second brew chamber part 20. For this the guiding cam 95 comprises the abutment face 95B the activation cam 93 can abut at. As soon as the arresting part 80 is moved in direction of the second brew chamber part 20, by this abutment, the first brew chamber part 18 is also moved. As soon as the first brew chamber part abuts against the second brew chamber part (e.g. shown in Fig. 12A - the closed position), the force acting on the snapping mechanism rises, especially pivoting the activation cam 93 and/or a respective pivotable portion 91, so that the abutment of the activation cam 93 and the abutment face 95B is freed. In such a situation the activation cam 93 together with the arresting part 80 is moved further forward passing the guiding cam 95 and moving in the arrested position as shown with Fig. 12A.

Preferably with such an embodiment the arresting part 80 comprises a resilient element 82 pretensioning the arresting part 80 back into its un-arrested position. As the guiding cam 95 is preferably comprising no abutment face at position 0 and 1 of Fig. 12B, i.e. the side facing the moving direction to the closed and arresting position, respectively, the arresting part 80 and the activation cam 93 can pass the guiding cam 95 on their way back to the un-arrested position by at least by overcoming a lower threshold force.

As mentioned the resilient element 82 may also transfer activation forces, which are moving the arresting part 80, onto the brew chamber part, at least supporting its movement. Without a snapping mechanism the resilient means can be arranged such that it moves the brew chamber part together with the arresting part, whereas it than may hold that the modulus of elasticity of the resilient element is such that in a closing movement the activation means moves the first brew chamber part relative to the second brew chamber part in the closed position before the arresting part reaches its arresting position and especially before the arresting part moves to its arresting position.

The positions 0 - 4 on the guiding cam 95, shown with Fig. 12B, may relate to respective positions and moving possibilities of the first and second brew chamber portion and the arresting part 80, respectively. As soon as the activation cam 93 is in one of the respective position 0 - 4 of the guiding cam 95, the following holds:
Position 0: The arresting part 80 is in the arresting position, wherein the first and second brew chamber parts 18, 20 are locked relative to each other.
Position 1: The arresting part 80 is slightly moved but the brew chamber, i.e. the first and second brew chamber parts, is still locked. There will be an increased friction between the arresting part and the brew chamber parts but because of the arresting part still arresting the engagement between the latching and the counter-latching members no movement of the brew chamber parts is possible.
Position 2: The activation cam 93 of the arresting part 80 reaches the highest point on the guiding cam 95, wherein from there the brew chamber parts start to be unlocked.
Position 3: The brew chamber parts are unlocked, the friction between the arresting part and the brew chamber parts lowers.
Position 4: The brew chamber parts are fully unlocked. The brew chamber parts and the arresting part will move further in tandem to their opening position.

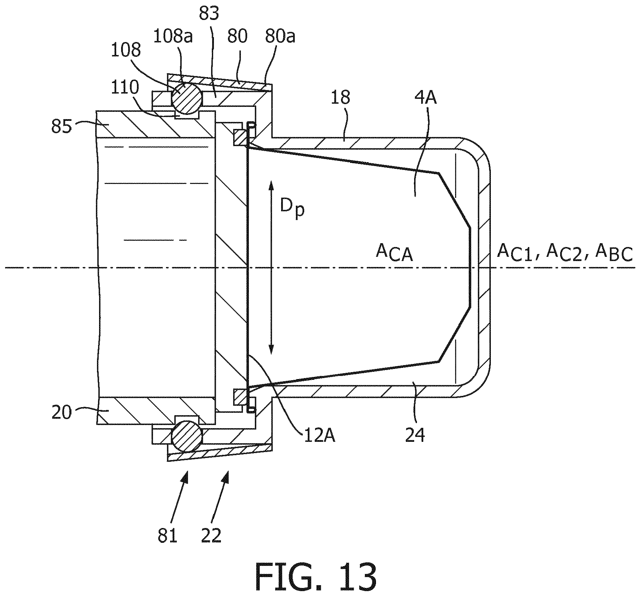

Fig. 13 shows a further arresting mechanism 81 with regard to the meshing of a protrusion 108 and a retainer 110. The first and second brew chamber parts 18, 20 in their closed position are arrested by the arresting mechanism 81 here schematically shown and similar to the one already described with regard to figs. 5. The respective explanations of the before described embodiments do therefore also apply unless otherwise mentioned. This also applies for all the other embodiments, especially of the arresting mechanism described herein, and vice versa.

The protrusion 108 is here e.g. provided as a sphere or similar ball which can especially move especially orthogonal to the axis AC1, AC2, ABC to engage and disengage with the retainer 110. In general it is also possible to provide the protrusion 108 as an elastic means pretensioned by the arresting part 80 in direction of the retainer 110 to activate and/or enforce the meshing between the protrusion 108 and the retainer 110.

Here a retainer 110 of a counter-latching member 85 is provided at the second brew chamber part 20. The complementary arranged protrusion 108 is provided at a latching member 83 of the first brew chamber part 18. Meshing of the protrusion 108 and the retainer 110 is again secured by an arresting part 80 which is here shown in an arresting position. The arresting part 80 is here comprising a pivotable portion 80A, so that the arresting part can be moved from its arresting position into an unarresting position and vice versa. Movement of the part 80 between the arresting position as shown with Fig. 13 and the un-arresting position (not shown) can be achieved by pivoting the pivotable portion 80A in direction as indicated by arrow D_{P} and especially around an axis orthogonal to the axis A_{C1}, A_{C2}, A_{BC} and/or a capsule axis A_{CA}, which is preferably arranged orthogonally to an exit face 12A of the capsule 4A arranged in the brew chamber 21 and here in a cavity 24 of the first brew chamber part 18.

The arresting mechanism 81 here is arranged such that pivoting of the pivotable portion 80A of the arresting part is performed during closing of the first brew chamber part 18 relative to the second brew chamber part 20 and the movement of the latching member 83 relative to the counter-latching member 85 respectively. Therefore the arresting part is here being indirectly coupled to the activation means for being moved by the latter.

The arresting part 80 may be arranged in such a way, that it biases the protrusion in direction of the retainer 110 thereby pretensioning and/or enforcing and/or activating the meshing respectively. For that reason the protrusion 108 might project in the un-arrested position in direction of the arresting part, protruding from the latching member 83. Here during the movement of the arresting part to its arrested position, the projecting protrusion abuts against the pivotable portion 80A of the arresting part. By this engagement the pivotable portion 80A is urging the protrusion into meshing with the retainer during the movement of the arresting ring 80 in its arrested position. It might be provided that the pivotable portion is thereby pretensioned in direction of this meshing engagement, so that the protrusion is additionally secured in the retainer. The meshing might be secured and fully established when the brew chamber parts reach their closed position.

In general the meshing of the protrusion and the retainer can also comprise a snapping mechanism as explained herein, at least comprising an engagement which can be disengaged when a respective threshold force is reached.

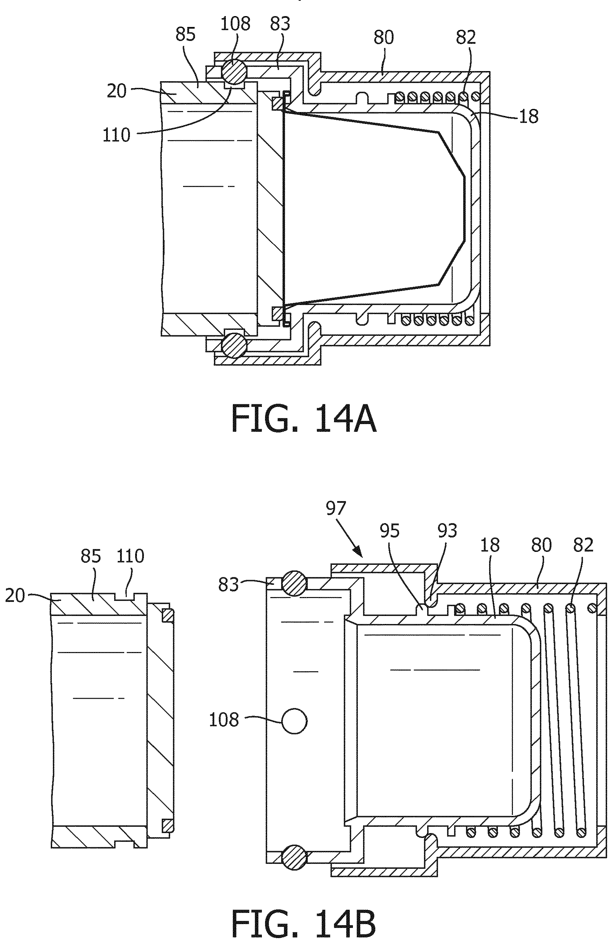

Figs. 14A and 14B are disclosing a further embodiment, wherein again a first brew chamber part 18 and a second brew chamber part 20 are arranged in a closed position. The first and second brew chamber parts are further arrested by an arresting mechanism 81 here schematically shown and similar to the one already described with regard to figs. 5. The respective explanations of the before described embodiments do therefore also apply unless otherwise mentioned. This also applies for all the other embodiments, especially of the arresting mechanism described herein, and vice versa.

A resilient element 82 is placed between the arresting part and the moveable brew chamber part, which is here for example the first brew chamber part 18. Again an arresting mechanism is provided with a protrusion 108 similar to the embodiments shown with Figs. 11 and 13, namely comprising at least one sphere or similar ball 108.

As the activation means 59 (not shown here) is preferably acting directly on the arresting part 80, due to the resilient element 82 the moveable brew chamber part, e.g. the first brew chamber part 18, will follow the movement of the arresting part. The first brew chamber part 18 will keep moving until it is stopped by the second brew chamber part 20 and preferably by an extraction plate, e.g. shown with Fig. 3, i.e. the closed position. Then the arresting part 80 will still move further on, while compressing the resilient element 82 till it reaches its end position which is the arresting position. In this embodiment the arresting part 80 is biased in a direction away from the second brew chamber part 20. A similar embodiment has already been described with regard to Fig. 5.

With the embodiment of Fig. 14 again a protrusion 108 is arranged at a latching member 83 of the first brew chamber part and a retainer 110 is arranged at a counter-latching member 85 of the second brew chamber part. The protrusion 108 and the retainer 110 are in meshing engagement. Again the parts and/or members can be arranged vice versa.

This embodiment, as can be seen with Fig. 14B, comprises multiple protrusions 108 here arranged as spheres or similar projecting, especially projecting from an inner side of the latching member 83 in the arrested position and/or projecting from an outer side of the latching member 83 in an un-arrested position. These spheres 108 are complementarily formed to the retainer 110, which in general can be arranged as a hole, groove or a similar recess for at least partly encompassing the protrusions 108, i.e. the spheres 108 respectively.

As also can be seen with Fig. 14B it is possible to provide the system and apparatus and the arresting mechanism 81 in general with a snapping mechanism 97 to secure the arresting part and at least one brew chamber part during their movement relative to each other.

Further the snapping mechanism 97 can provide for timing the movement of the arresting part and at least one brew chamber parts as already has been described herein. The snapping mechanism can be provided with a guiding cam 95 and an activation cam 93 matching with each other. The activation cam 93 can be arranged at the arresting part and the guiding cam 95 can be arranged at the first brew chamber part, or vice versa. The same of course applies when the arresting part is arranged at the second brew chamber part 20. During movement of the arresting part 80 relative to the second brew chamber part 20 the meshing of the guiding cam 95 and the activation cam 93 also moves the first brew chamber part 20 in the same direction. This movement and locking respectively may be enhanced by the resilient member 82. As soon as the first brew chamber part 18 and the second brew chamber part 20 are reaching the closed position, a specific threshold force is reached, disengaging the meshing of the activation cam 93 with the guiding cam 95 and further moving the arresting part from its initial unarresting position (as shown with Fig. 14B) in the arresting position (as shown with Fig. 14A). By compressing the resilient element 82, the arresting part is pretensioned in direction of its unarresting position.

Fig. 15A shows another snapping mechanism 97 here also provided with an activation cam 93 and a complementarily arranged guiding cam 95. With regard to the activation during the arresting and un-arresting position, the same applies as mentioned before, especially with regard to Figs. 12A and 12B. The snapping mechanism 97 again guarantees the correct timing between movement of the brew chamber parts and the arresting part.

As mentioned before, arresting of the first brew chamber part 18 and the second brew chamber part 20 may be arranged by at least one protrusion 108 meshing with at least one retainer 110. The respective elements arranged for providing this engagement can be provided as described in the following Figures.

One possibility, shown with Fig. 15A, for arranging for a meshing between the protrusion and the retainer is providing the protrusion 108 to comprise at least one sphere, especially projecting from the and/or moveable within the latching member 83 or the counter-latching member 85, respectively, as it has been explained before. The sphere 108 is then preferably meshing with the retainer 110, wherein its movement can be allowed or prohibited dependent on the position of the arresting part 80 respectively. Also pretensioning of the sphere via the arresting part can be provided.

Another embodiment of the protrusion 108, shown with Fig. 15B can comprise at least one snapping element arranged for meshing with the retainer in the arrested position and especially in the latching position. Such a snapping element can for example be a ring or similar substantially annular element having pivoting portions 108B, wherein these pivoting portions are preferably provided with locking projections 108A arranged complementarily to the retainer. This snapping element can for example be provided from a spring metal material or a resilient plastic material. It may surround the respective brew chamber part where it may be arranged, in total or at least partly.

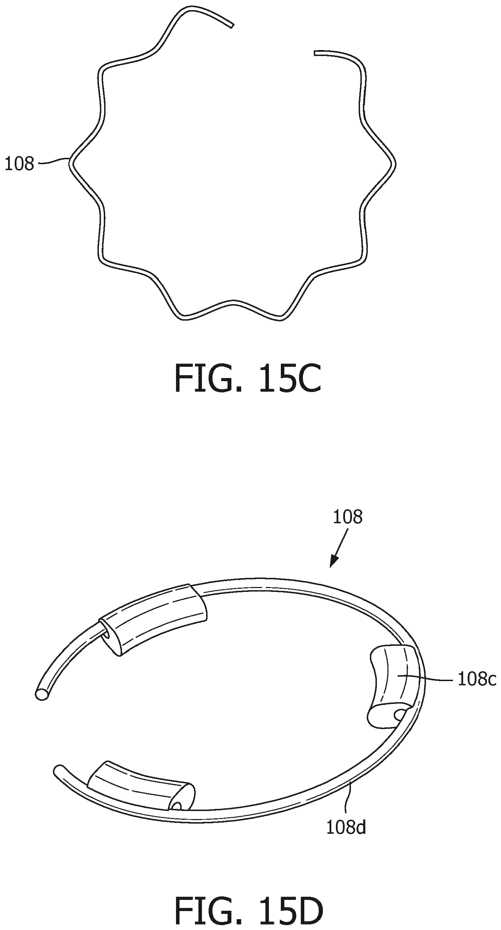

As shown with Fig. 15C, the protrusion can also comprise at least one resilient ring or similar substantially ring-shaped element meshing with the retainer in the arrested position and especially in the latching position. This ring element or similar annular element can have resilient projections protruding in such a way that they can mesh with the complementary arranged retainer 110. Here the ring has a zig-zag form, wherein other bended forms providing projecting protrusions may alternatively and/or in addition be provided. The ring element 108 can be provided for example by a spring metal or similar resilient material.

Another embodiment is shown with Fig. 15D, wherein the protrusion comprises at least one cam element 108C especially projecting in direction of the retainer 110 and meshing with the latter in the arrested position and especially in the latching position. This cam element 108C can be arranged on a ring element 108D or similar element and preferably on a resilient element as well. The cam element itself can be also arranged by a resilient material. This also applies for any kind of protrusion described herein.

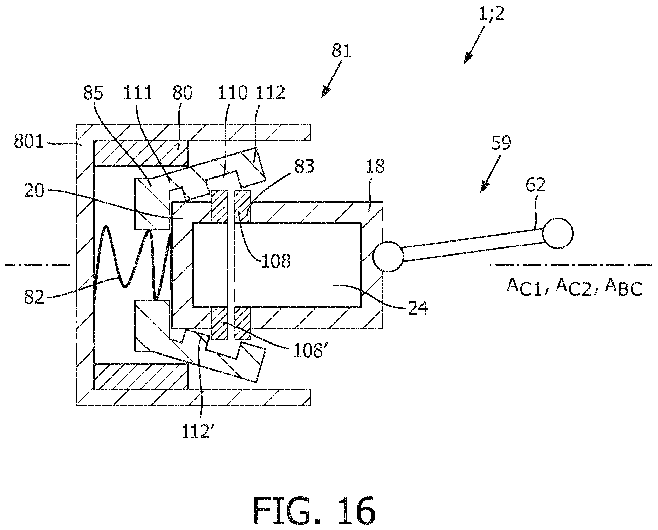

A further embodiment of the apparatus having an arresting mechanism 81 is shown with fig. 16.In their closed position the first and second brew chamber parts 18, 20 are arrested by an arresting mechanism 81, here schematically shown and similar to the one already described with regard to figs. 5. The respective explanations of the before described embodiments do therefore also apply unless otherwise mentioned. This also applies for all the other embodiments, especially of the arresting mechanism described herein, and vice versa.

The arresting mechanism comprises a latching member 83 arranged at the first brew chamber part 18 and a counter-latching member 85 arranged at the second brew chamber part 20. These members 83, 85 may also be arranged vice versa.

The latching member 83 and the counter-latching member 85 are movable relative to each other between a latching position and an un-latching position. The latching member is directly arranged at the first brew chamber part, so that the latching member moves together with the first brew chamber part 18. The counter latching member 85 may be coupled with the second brew chamber part 20. It may also be provided that the second brew chamber part is movable relative to the counter-latching member 85 wherein the counter-latching member is then preferably coupled to a housing of the apparatus.

The arresting mechanism 81 further comprises an arresting part 80 being movable relative to the latching member 83 and the counter-latching member 85 between an arresting position and an un-arresting position, wherein in the arresting position the arresting part 80 arrests and/or actuates an engagement of the latching member 83 and the counter-latching member 85 in their latching position, thereby arresting the first and second brew chamber parts 18, 20 relative to each other, and in the un-arresting position (as shown with fig. 16) un-arrests and/or un-actuates an engagement of the latching member 83 and the counter-latching member 85 in their un-latching position, thereby un-arresting the first and second brew chamber parts 18, 20 relative to each other.

Especially with the embodiment of fig. 16, the arresting part 80 may be fixed to a housing 801 of the apparatus. It may further be in-directly coupled to the activation means 58, 62, 64, 66, 70, 74, which are provided for moving the first and second brew chamber parts relative to each other. In detail it may hold that the second brew chamber part 20 is in-directly coupled to the (fixed) arresting part 80 via a resilient element 82, especially a helical spring 82. The mechanism can be further arranged that, as soon as the first brew chamber part 18 moves in direction of the second brew chamber part 20, being e.g. pushed by the activation means, and further, as soon as the first brew chamber part 18 abuts against the second brew chamber part 20, that both parts 18, 20 are moving in direction of the arresting part 80, thereby pretensioning the resilient element 82. During this movement the arresting part 80 activates and further arrests the latching and engagement, respectively, of the latching member 83 and the counter-latching member 85.

The arresting part 80 may be arranged surrounding the first brew chamber part 18. As shown here it may also hold that it surrounds the second brew chamber part 20. In detail the arresting part 80 may be provided as an arresting ring 80 arranged surrounding at least partly the first brew chamber part and/or the second brew chamber part. The arresting part 80 may be stationary relative to the housing 801. The arresting part 80 may be axially movable relative to the second brew chamber part 20 (like shown here) and/or the first brew chamber part 18. The arresting part 80 may also be guided by an external surface of the second brew chamber part 20.

Here the first brew chamber part 18 comprises the latching member 83, here having a protrusion 108. The protrusion 108 may be a substantially annular protrusion. The protrusion 108 may extend outwardly. Here the protrusion 108 forms an outermost edge of the first brew chamber part 18. Further with this embodiment the second brew chamber part 20 comprises a protrusion 108'. This protrusion may be provided for cooperating with the protrusion 108 of the first brew chamber part 18. It may further mesh with the retainer 110.

Here counter-latching member 85 comprise a retainer 110. Here the retainer 110 is designed as a circumferential ring of retainer lips. The retainer 110 may comprise a pivotally portion 111. The retainer 110 may include at least one tooth 112. The retainer and the protrusions are arranged such that they are meshing with each other in the latching position thereby arresting the first and the second brew chamber parts relative to each other.

The latching member 83 may comprise the protrusion 108 and/or the counter-latching member 85 may comprise the retainer, or vice versa, wherein especially the protrusion 108 is meshing with the retainer 110 in the latching position.

For reliable disengagement the latching member 83 and/or the counter-latching member 85 may be biased in direction of the unlatching position and especially in such a way that this bias can be overcome by the movement of the arresting part from its un-arresting position to its arresting position. With this embodiment the arresting part 80 drives the latching member 83 and/or the counter-latching member 85 in engagement when being moved from its un-arresting position (see fig. 16) into its arresting position.

Figures 17A and 17B show a more detailed embodiment of the counter-latching member 85 disclosed in Figures 5A-5C. In this embodiment, the counter-latching member 85 comprises a retainer 110 formed from ring segments 110A. Each ring segment 110A is provided with a number of retainer lips 110B that can pivot relatively to the ring segment, in a radially outward direction. To that end, the retainer lips 110B may include a pivotally portion 111 as described before with reference to Figures 5A-5C. The retainer lips 110B may furter comprise a tooth 112 as described before. The retainer lips 110B may be integrally formed with the ring segment. To provide for their pivotability, the ensemble may be made from a resilient material. Alternatively or addiationally, the pivotally portion 111 may locally be designed of reduced thickness so as to form a living hinge.

The ring segment 110A may at one or both of its circumferential ends be provided with a suitable coupling means 110C for easy coupling to an adjacent ring segment 110A and/or the brew chamber part 20 (or the brew chamber part 18, as the case may be). In the illustrated embodiment, two ring segments 110A are provided. In other embodiments, more ring segments 110A may be provided, preferably together spanning the entire circumference of the brew chamber part 20 or 18 respectively. In the illustrated embodiment, each ring segment 110A is provided with six retainer lips 110B bringing the total number at twelve. In alternative embodiments, the number of retainer lips may be lower or higher.

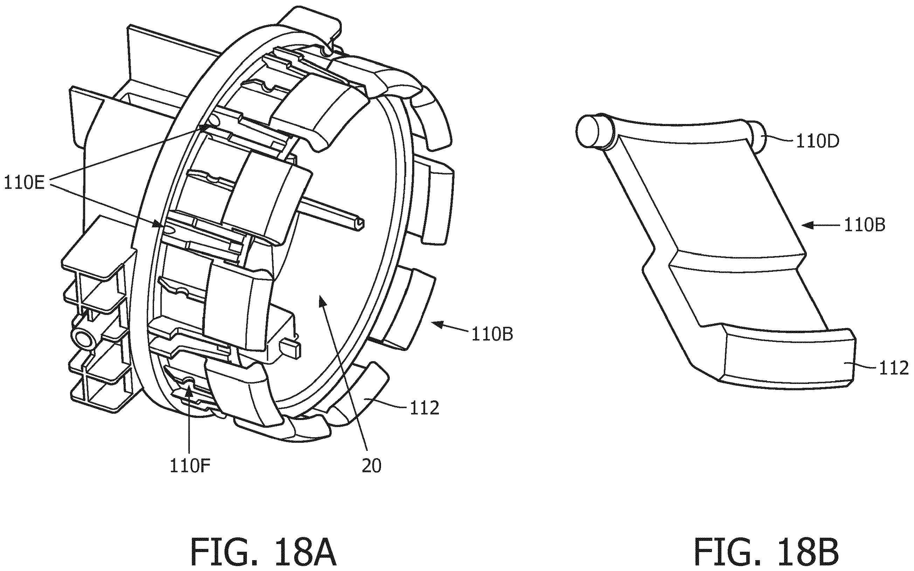

Figures 18A and 18B show an alternative embodiment of a retainer 110 wherein the retainer lips 110B are formed as separte components. The retainer lips 110B may be pivotally mounted around the circumference of the brew chamber part 20 (or 18 respectively). To that end, the retainer lips 110B may be provided with stubs 110D that can be pivotally received in recesses 110E provided around the circumference of the brew chamber part 20 or 18 respectively. The retainer lips 110B may be kept in position by means of for instance an O-ring, a wire spring or the like (not shown). This O-ring or wire spring may further help to bias the retainer lips radially inward. Each retainer lip 110B may be provided with a recess 110F, preferably in its outer side, i.e. the side facing radially outward in mounted condition, for accommodating the O-ring or wire spring and immobilizing said ring or spring, at least in axial direction. The retainer lips 110B may further comprise a tooth 112, similar to the ones described earlier.

The embodiment of Figures 18A,B has the advantage that the separate retainer lips 110B are easier to manufacture than the integrally formed version shown in Figures 17A, 17B. The seperate retainer lips thus may offer more design freedom as to their shape and/or material choice. The material does not need to be resilient but can for instance be selected to withstand high shear forces, have little or no creep, good wear resistance, etc..

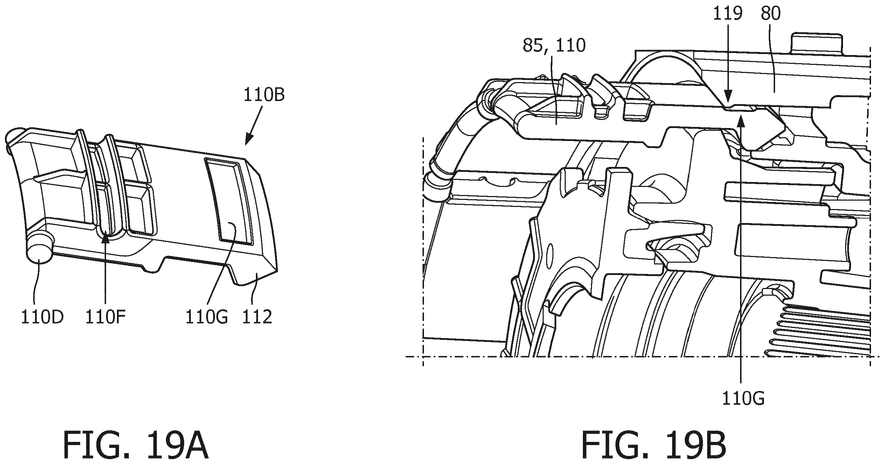

The retainer lips 110B of the previously described embodiments, or more generally, the counter latching member 85 (or latching member 83 as the case may be) may be provided with a groove or cavity 110G in their outer side, that is, the side that in mounted condition faces radially outward towards the arresting part 80. This is illustrated in Figures 19A and 19B. In such case, the arresting part 80 may be provided with a protruberance 119 that can engage with said cavity 110G in arrested position, as illustrated in Figure 19B which figure corresponds largely to the embodiment shown in Figures 5C. Thus, the description and explanation given with reference to Figures 5A-C equally apply to the present embodiment, unless otherwise mentioned.

The cavity 110G and protruberance 119 together form an additional safety provision that may prevent the brew chamber from being opened too easily or unintentionally, in particularly when said brew chamber is under pressure. In use, when the arresting part 80 is in an arresting position, surrounding the retainer 110 (or the counter latching member 85 or latching member 83 as the case may be) and when the presure in the brew chamber is increased, this may cause the retainer 110 (or latching member 85, rep. 83) to be urged radially outward, towards and against the arresting part 80. This will increase the friction between said parts, and with that, the holding force. As a result, a relatively large operating force may be needed to move the arresting part 80 against said friction or holding force to an unarresting position in which the retainer 110 (or latching members 85, resp. 83) may become unlocked. Thanks to the aforedescribed cavity 110G and protruberance 119, the holding force between the arresting part 80 and retainer 110 (or latching member 85 or 83 resp.) may even be further increased. When a user tries to move the arresting part 80 to an unarresting position, the protruberance 119 will lock behind the edge of the cavity 110G, thus increasing the holding force.

The arresting part 80 may be provided with a number of protruberances 119 that equals the number of cavities 110G, so one protruberance per cavity 110G. Alternatively, the arresting part 80 may be provided with less protruberances 119. Thus the holding force may be tuned, by varying the number of protruberances 119. In addition or alternatively, the holding force may be tuned by varying the radial depth of the protruberances 119 and cavities 110G, with the holding force increasing as saide depth increases.

Of course, other solutions may be selected to increase the holding force between the arresting part 80 and the retainer 110 (or latching member 85, respectively 83, as the case may be), e.g. by providing the contacting surface of said components with other friction increasing profiles.

Herein, the invention is described with reference to specific examples of embodiments of the invention. It will, however, be evident that various modifications and changes may be made therein, without departing from the essence of the invention. For the purpose of clarity and a concise description features are described herein as part of the same or separate embodiments, however, alternative embodiments having combinations of all or some of the features described in these separate embodiments are also envisaged.

In the examples, the central portion 32 of the extraction plate 30 includes a plurality of relief elements 124. The peripheral portion 34 includes no relief elements. However, it will be appreciated that the peripheral portion may also include relief elements. The extraction plate and the second exit area 13B can be adapted to each other such that a flow resistance of the second exit area when opened is less than a flow resistance of the first exit area 13A when opened or vice versa. The extraction plate and the second exit area may be adapted to each other such that the second exit area tears on the extraction plate over a larger surface area than the first exit area or vice versa. The extraction plate and the second exit area may be adapted to each other such that the second exit area tears on the extraction plate on more locations than the first exit area. This also applies for the first exit area. Outer relief elements may be designed for tearing both the first and second exit area wherein the second exit area tears on the outer relief elements over a larger surface area than the first exit area. The extraction plate can include relief elements of a first type and at least one relief element of a second type, wherein the relief elements of the first type are arranged within an area corresponding to the first exit area, and the at least one relief element of the second type being arranged within an area corresponding to the second exit area and outside the area corresponding to the first exit area. The relief element of the second type may have a sharper edge than the relief elements of the first type. The second exit area may include a weakened zone. The weakened zone may be located in a peripheral area of the second exit area.

In the examples, the first and second exchangeable capsules 4A, 4B have substantially the same shape. It is also possible to provide a third capsule having a different shape. The third capsule can e.g. be shaped to substantially fill the brew chamber 22 when the central portion 32 is in the first extraction position. It is also possible to provide a fourth capsule having a different shape and so on. The fourth capsule can e.g. be shaped to substantially fill the brew chamber when the central portion is in the second extraction position.

In the examples, the first exchangeable capsule 4A has an outwardly extending flange-like rim 14A. It will be appreciated that it is possible that the first exchangeable capsule does not include an outwardly extending rim. In the examples, the second exchangeable capsule 4B has an outwardly extending flange-like rim 14B. It will be appreciated that it is possible that the second exchangeable capsule does not include an outwardly extending rim.

In the examples, the capsule body 6A, 6B and exit face12A, 12B, and especially a lid, are made of aluminium foil, preferable polymer coated aluminium foil to allow easy welding of the exit face to the body. It will be appreciated that the capsule body and/or exit face can be made of a wide variety of materials considered suitable by the skilled person and capable of being processed into a sheet, film or foil using techniques conventionally known in the art such as extrusion, co-extrusion, injection molding, blow molding, vacuum forming, etc. Suitable materials for the capsule body and/or exit face include, without being limited thereto, plastic materials, in particular thermoplastic materials, for example a polyolefin polymer, for example polyethylene or polypropylene, PVC, polyesters for example polyethylene terephthalate (PET); metal foils such as aluminum, stainless steel, metal alloys etc.; or sheets of a woven or a non-woven or otherwise processed fibrous material, like paper, polyester, etc.; or combinations thereof, e.g. multilayers. The material for the capsule can be a biodegradable polymer or another biodegradable material. The skilled person will be capable of selecting the appropriate material taking into account the envisaged use with food material and any other relevant circumstances during use of the capsule. The thickness of the sheet or foil may be chosen such that a form stable capsule is provided. The thickness of the sheet or foil may vary with the nature of the material.

In the examples, the capsules are closed capsules. It is also possible to provide the system with an open capsule. The open capsule is open prior to insertion into the apparatus. The open capsule can be pre-perforated. The open capsule can be packaged in a hermetically sealed package which has to be removed before inserting the open capsule in the apparatus. In the examples, the capsules are pierced by the piercing means. It is also possible to provide the system with a capsule that is not pierced by the piercing means 44. Such capsule can e.g. include an entrance filter. In the examples, the capsules open against the extraction plate. It is also possible to provide the system with a capsule that does not open against the extraction plate. Such capsule can e.g. include an exit filter.

In the examples, the capsules themselves do not include a sealing member. It will be appreciated that it is possible to provide the capsule with a sealing member, e.g. a resilient and/or plastically deforming sealing member. The sealing member can e.g. be placed on the rim, e.g. on the side facing towards the cup-shaped body or on the side facing away from the cup-shaped body. Alternatively, or additionally, a sealing member can be provided on the circumferential wall 10A, 10B and/or on the bottom 8A, 8B.

In the examples the arresting part 80 and retainer 110 extend along substantially the entire perimeter of the first and second brew chamber parts. This provides particular good locking of the two brew chamber parts onto each other. However, it will be appreciated that it is also possible that the arresting part and retainer include arresting means and retaining means at one or more discrete positions along the perimeter, e.g. at two, three, four, six or eight positions.

It will be appreciated that it is also possible to provide a first apparatus arranged for brewing a beverage using a first exchangeable capsule, but incapable of brewing a beverage using a second exchangeable capsule. Such first apparatus can be included in a system with the apparatus as described in relation to the Figures and a first exchangeable capsule and optionally a second exchangeable capsule.

It will be appreciated that it is also possible to provide a second apparatus arranged for brewing a beverage using a second exchangeable capsule, but incapable of brewing a beverage using a first exchangeable capsule. Such second apparatus can be included in a system with the apparatus as described in relation to the Figures and a second exchangeable capsule and optionally a first exchangeable capsule.

However, other modifications, variations, and alternatives are also possible. The specifications, drawings and examples are, accordingly, to be regarded in an illustrative sense rather than in a restrictive sense.

For the purpose of clarity and a concise description features are described herein as part of the same or separate embodiments, however, it will be appreciated that the scope of the invention may include embodiments having combinations of all or some of the features described.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage.

## Claims

1. Apparatus (2) for preparing a quantity of beverage suitable for consumption, including:
a first brew chamber part (18) and a second brew chamber part (20), being movable relative to each other between an open position and a closed position, wherein in the closed position the second brew chamber part closes the first brew chamber part for forming a brew chamber (22A,B),
an arresting mechanism (81) for arresting the first brew chamber part and the second brew chamber part relative to each other in their closed position, the arresting mechanism comprising
a latching member (83) arranged at the first brew chamber part and
a counter-latching member (85) arranged at the second brew chamber part, or vice versa
the latching member and the counter-latching member being movable relative to each other between a latching position and an un-latching position,
the arresting mechanism further comprising an arresting part (80) being movable relative to the latching member and the counter-latching member between an arresting position and an un-arresting position, wherein in the arresting position the arresting part arrests and/or actuates an engagement of the latching member and the counter-latching member in their latching position, thereby arresting the first and second brew chamber parts relative to each other, and in the un-arresting position un-arrests and/or un-actuates an engagement of the latching member and the counter-latching member in their un-latching position, thereby un-arresting the first and second brew chamber parts relative to each other, **characterized in that** the arresting part (80) in the arresting position at least partly surrounds the latching member (83) and/or the counter-latching member (85) from an outside and especially abuts against the latching member and/or the counter-latching member.

2. Apparatus according to claim 1, including an activation means (58, 62, 64, 66, 70, 74), such as a manual lever (58), arranged for moving the first and/or second brew chamber part, the arresting part (80) being coupled to the activation means for being moved by the latter.

3. Apparatus according to claim 1 or 2, wherein the brew chamber (22A,B) is arranged for holding a capsule (4A,B) holding a beverage preparation product.

4. Apparatus according to any one of the preceding claims, wherein the latching member (83) and the counter-latching member (85) are arranged as to be relatively movable relative to each other between the latching position and the un-latching position together with the first brew chamber part (18) and the second brew chamber part (20), respectively, especially when the arresting part (80) is not in its arresting position.

5. Apparatus according to any one of the preceding claims, wherein the latching member and/or the counter-latching member are integrally arranged at a body of the first brew chamber part and/or the second brew chamber part, respectively.

6. Apparatus according to any one of the preceding claims, wherein the latching member and/or the counter-latching member are movable relative to each other along a central axis of the first brew chamber part and/or central axis of the second brew chamber part and/or a brew chamber axis, and especially without rotational movement around this axis.

7. Apparatus according to any one of the preceding claims, wherein the first and second brew chamber parts are movable relative to each other along a common central axis and/or a brew chamber axis, and especially without rotational movement around this axis, before they reach their closed position.

8. Apparatus according to any one of the preceding claims, wherein the arresting part (80) is arranged at the first brew chamber part (18) and/or the second brew chamber part (20).

9. Apparatus according to any one of the preceding claims, wherein the arresting part (80) is an arresting ring, arranged surrounding at least partly the first brew chamber part (18) and/or the second brew chamber part (20).

10. Apparatus according to any one of the preceding claims, wherein the arresting part (80) is arranged movably along a central axis of the first brew chamber part and/or the second brew chamber part and/or a brew chamber axis.

11. Apparatus according to any one of the preceding claims, wherein the arresting part (80) is arranged axially movable relative to the first brew chamber part and/or the second brew chamber part and/or the brew chamber.

12. Apparatus according to any one of the preceding claims, wherein the arresting part (80) is arranged pivotable around an axis substantially orthogonal to a central axis of the first brew chamber part and/or central axis of the second brew chamber part and/or a brew chamber axis.

13. Apparatus according to any one of the preceding claims, wherein the arresting part (80) is guided by an external surface of the first brew chamber part and/or the second brew chamber part.

14. Apparatus according to any one of the preceding claims, wherein the arresting part (80) is connected to the first brew chamber part via one or more resilient elements (82).

15. Apparatus according to any one of the preceding claims, wherein in the arresting position the arresting part (80) is biased in direction of the un-arresting position.

16. Apparatus according to any one of the preceding claims, wherein the activation means is directly coupled to the arresting part.

17. Apparatus according to any one of the preceding claims, especially any one of the claims 14 - 16, wherein the first brew chamber part (18) is coupled to the arresting part (80) via the one or more resilient elements (82).

18. Apparatus according to any one of the preceding claims, especially any one of the claims 14 - 17, wherein the first brew chamber part is coupled to the activations means (58, 62, 64, 66, 70, 74) via the resilient element (82) and the arresting part (80).

19. Apparatus according to any one of the preceding claims, especially any one of the claims 14 - 18, wherein the modulus of elasticity of the resilient element (82) is such that in a closing movement the activation means moves the first brew chamber part (18) relative to the second brew chamber part (20) in the closed position before the arresting part (80) reaches its arresting position and especially before the arresting part moves to its arresting position.

20. Apparatus according to any one of the preceding claims, wherein the arresting mechanism (81) is arranged such that it is actuated while closing the first brew chamber part (18) against the second brew chamber part (20), wherein the arresting part reaches its arresting position after the closed position is reached.

21. Apparatus according to any one of the preceding claims, wherein the activation means comprises a knee joint (62) especially connected to an activation lever (58).

22. Apparatus according to claim 21 wherein the knee joint (62) in the closed position is arranged in a stretched position, especially substantially aligned parallel to a central axis of the first brew chamber part and/or central axis of the second brew chamber part and/or a brew chamber axis.

23. Apparatus according to any one of the preceding claims, wherein the arresting part in the arresting position biases the latching member and/or the counter-latching member in their engagement, thereby arresting the first and second brew chamber parts relative to each other.

24. Apparatus according to any one of the preceding claims, wherein the latching member and the counter-latching member are meshing with each other in the arresting position and especially in their latching position.

25. Apparatus according to claim 24, wherein the meshing can be dis-engaged by moving the first and second brew chamber parts from their closed position in direction to their opened position, when the arresting part is not in the arresting position.

26. Apparatus according to any one claims 24 or 25 wherein the meshing can be dis-engaged by moving the first and second brew chamber parts from their closed position in direction to their opened position along an axis parallel to a central axis of the first brew chamber part and/or central axis of the second brew chamber part and/or a brew chamber axis, when the arresting part is not in the arresting position.

27. Apparatus according to any one of claims 24-26 wherein the arresting part arrests the meshing in its arresting position.

28. Apparatus according to any one of the preceding claims, wherein the latching member (83) comprises a protrusion (108) and/or the counter-latching member (85) comprises a retainer (110), or vice versa, wherein especially the protrusion is meshing with the retainer in the arresting position and especially in the latching position.

29. Apparatus according to claim 28, wherein the protrusion (108) is formed as a substantially annular ring protrusion especially extending substantially orthogonal to the main axis of the first or the second brew chamber part (18, 20).

30. Apparatus according to any one of the claims 28 or 29, wherein the protrusion (108) comprises at least one sphere meshing with the retainer (110) in the arrested position and especially in the latching position.

31. Apparatus according to any one of the claims 28 - 30, wherein the protrusion comprises at least one snapping element meshing with the retainer in the arrested position and especially in the latching position.

32. Apparatus according to any one of the claims 28 - 31, wherein the protrusion comprises at least one resilient ring meshing with the retainer in the arrested position and especially in the latching position.

33. Apparatus according to any one of the claims 28 - 32, wherein the protrusion comprises at least one cam element especially biased in direction of the retainer, meshing with the latter in the arrested position and especially in the latching position.

34. Apparatus according to any one of the claims 28 - 33, wherein the protrusion (108) forms an outermost edge of the first brew chamber part or the second brew chamber part.

35. Apparatus according to any one of the claims 28 - 34, wherein the retainer (110) comprises at least one tooth (112) and/or recess.

36. Apparatus according to any one of the claims 28 - 35, wherein the retainer comprises at least one tooth and/or recess for meshing with a protrusion of the latching member.

37. Apparatus according to any one of the claims 28 - 36, wherein the retainer (110) comprises an especially resiliently portion (111), especially pivotable around an axis substantially orthogonal to a central axis of the first brew chamber part and/or central axis of the second brew chamber part and/or a brew chamber axis, preferably pivotable around an axis parallel to a protrusion axis of a protrusion of the latching member.

38. Apparatus according to any one of the claims 28 - 37, wherein the retainer (110) has the form of an at least partly circumferential ring.

39. Apparatus according to any one of the claims 28 - 38, wherein the arresting part is arranged such that in its arresting position it surrounds the retainer preventing the retainer from releasing its meshing with the protrusion and especially from pivoting, thereby arresting the first brew chamber part with respect to the second brew chamber part.

40. Apparatus according to any one of the preceding claims, wherein in the arresting position the arresting part is at least partly surrounded by at least one locking part (118), arranged at the second brew chamber part and/or the first brew chamber part.

41. Apparatus according to claim 40, wherein in the arresting position the arresting part (80) is interposed between the locking part (118) and at least one of the latching member, the counter-latching member and the retainer.

42. Apparatus according to any one of the claims 40 and 41, wherein the locking part (118) is a locking ring, arranged at least partly surrounding the first brew chamber part and/or the second brew chamber part.

43. System (1) including an apparatus (2) according to any one of claims 1-42 and an exchangeable capsule (4A).

44. System according to claim 43, wherein the exchangeable capsule has a body (6A) and an exit face (12A) attached to the body.

45. System according to claim 43 or 44, wherein the system further comprises a further exchangeable capsule (4B) having a further body (6B) and a further exit face (12B) attached to the further body, the further exit face having a larger diameter than the exit face, and
wherein first brew chamber part (18) is comprising a cavity (24), arranged for selectively holding one of the exchangeable capsule and the further exchangeable capsule, and
the second brew chamber part (20) is arranged for closing the first brew chamber part around exchangeable capsule or further exchangeable capsule, for forming the brew chamber (22A,B),
wherein the second brew chamber part has an extraction plate (30) for abutting against the exit face or further exit face, the extraction plate including a central portion (32) and a peripheral portion (34), the central portion being especially axially movable relative to the peripheral portion between a first position and a second position, wherein the central portion is moved between the first and the second position by the movement of the first brew chamber part relative to the second brew chamber part.

46. A method for preparing a quantity of beverage suitable for consumption, including:
introducing a beverage preparation product, e.g. contained in a capsule (4A,B) having a body (6A,B) and an exit face (12A,B) attached to the body, into the first and/or second brew chamber part (18, 20) of an apparatus (2) according to any one of the claims 1 - 42, wherein the first and second brew chamber parts are in the open position;
moving the first and second brew chamber parts relative to each other from the open position to the closed position, wherein in the closed position the second brew chamber part closes the first brew chamber part for forming the brew chamber (22A,B) surrounding the beverage preparation product;
supplying a fluid to the beverage preparation product for beverage preparation; and
discharging a prepared beverage from the brew chamber, wherein
while moving the first and second brew chamber parts relative to each other from the open position to the closed position, the latching member (83) and the counter-latching member (85) are moved relative to each other from their un-latching position to their latching position, and wherein
while and/or after moving the first and second brew chamber parts relative to each other from the open position to the closed position, the arresting part (80) is moved relative to the latching member and the counter-latching member from its un-arresting position to its arresting position, thereby arresting and/or actuating an engagement of the latching member and the counter-latching member in their latching position so that the first brew chamber part and the second brew chamber part are arrested relative to each other in their closed position.

47. Method according to claim 46, wherein the arresting part (80) is moved by the activation means (58, 62, 64, 66, 70, 74).

48. Method for locking a first brew chamber part relative to a second brew chamber part of an apparatus according to any one of the claims 1 - 42 or of a system according to any one of claims 43-45, comprising the steps of:
moving the first and second brew chamber parts (18, 20) relative to each other from the open position to the closed position, wherein in the closed position the second brew chamber part closes the first brew chamber part for forming the brew chamber (22A,B);
while moving the first and second brew chamber parts relative to each other from the open position to the closed position, moving the latching member (83) and the counter-latching member (85) relative to each other from the un-latching position to the latching position, and
while and/or after moving the first and second brew chamber parts relative to each other from the open position to the closed position, moving the arresting part (80) relative to the latching member and the counter-latching member from its un-arresting position to its arresting position, thereby arresting and/or actuating an engagement of the latching member and the counter-latching member in their latching position so that the first brew chamber part and the second brew chamber part are arrested relative to each other in their closed position.

49. Method according to claim 48, including moving the first and second brew chamber parts relative to each other from the open position to the closed position by activating the activation means, and especially by moving a manual lever (58), wherein the arresting part (80) is moved by the activation means

## Patentansprüche

1. Gerät (2) zum Zubereiten einer zum Verzehr geeigneten Getränkemenge, das Folgendes umfasst:
einen ersten Brühkammerteil (18) und einen zweiten Brühkammerteil (20), die relativ zueinander zwischen einer offenen Position und einer geschlossenen Position bewegt werden können, wobei in der geschlossenen Position der zweite Brühkammerteil den ersten Brühkammerteil verschließt, um eine Brühkammer (22A, B) zu bilden,
einen Arretiermechanismus (81) zum Arretieren des ersten Brühkammerteils und des zweiten Brühkammerteils relativ zueinander in der geschlossenen Position, wobei der Arretiermechanismus Folgendes umfasst:
ein Verriegelungselement (83) am ersten Brühkammerteil und
ein Gegenverriegelungselement (85) am zweiten Brühkammerteil oder umgekehrt,
wobei das Verriegelungselement und das Gegenverriegelungselement relativ zueinander zwischen einer Verriegelungsposition und einer Entriegelungsposition bewegt werden können,
und wobei der Arretiermechanismus zudem ein Arretierteil (80) aufweist, das relativ zum Verriegelungselement und Gegenverriegelungselement zwischen einer Arretierposition und einer nicht arretierten Position bewegt werden kann, wobei in der Arretierposition das Arretierteil das Verriegelungselement und das Gegenverriegelungselement in der Verriegelungsposition einrastet und/oder betätigt, wodurch die ersten und zweiten Brühkammerteile relativ zueinander arretiert werden. Hierbei werden in der Entriegelungsposition das Verriegelungselement und das Gegenverriegelungselement in der Entriegelungspsoition entriegelt und/oder nicht ausgelöst, wodurch die ersten und zweiten Brühkammerteile relativ zueinander entriegelt werden,
das sich dadurch auszeichnet, dass das Arretierteil (80) in der Arretierposition das Verriegelungselement (83) und/oder das Gegenverriegelungselement (85) von außen zumindest teilweise umgibt und an das Verriegelungselement und/oder das Gegenverriegelungselement angrenzt.

2. Gerät gemäß Anspruch 1,
mit einer Aktivierungsvorrichtung (58, 62, 64, 66, 70, 74) wie z. B. einem Handgriff (58), mit dem der erste und/oder zweite Brühkammerteil bewegt wird, wobei das Arretierteil (80) mit der Aktivierungsvorrichtung verbunden ist, um von diesem bewegt zu werden.

3. Gerät gemäß Anspruch 1 oder 2,
wobei die Brühkammer (22A,B) eine Kapsel (4A,B) aufnehmen kann, die das zuzubereitende Getränkeprodukt enthält.

4. Gerät gemäß einem der vorherigen Ansprüche,
wobei das Verriegelungselement (83) und das Gegenverriegelungselement (85) so angeordnet sind, dass sie gemeinsam mit dem ersten Brühkammerteil (18) bzw. dem zweiten Brühkammerteil (20) relativ zueinander zwischen der Verriegelungsposition und der Entriegelungsposition bewegt werden können. Dies gilt insbesondere dann, wenn sich das Arretierteil (80) nicht in seiner Arretierposition befindet.

5. Gerät gemäß einem der vorherigen Ansprüche,
wobei das Verriegelungselement und/oder das Gegenverriegelungselement in das Gehäuse des ersten Brühkammerteils und/oder des zweiten Brühkammerteils integriert sind.

6. Gerät gemäß einem der vorherigen Ansprüche,
wobei das das Verriegelungselement und/oder das Gegenverriegelungselement relativ zueinander entlang einer Mittelachse des ersten Brühkammerteils und/oder der Mittelachse des zweiten Brühkammerteils und/oder einer Brühkammerachse bewegt, nicht jedoch um die Achse gedreht werden können.

7. Gerät gemäß einem der vorherigen Ansprüche,
wobei das erste und das zweite Brühkammerteil relativ zueinander entlang einer gemeinsamen Mittelachse und/oder einer Brühkammerachse bewegt, nicht jedoch um die Achse bewegt werden können, bevor sie die verriegelte Position erreichen.

8. Gerät gemäß einem der vorherigen Ansprüche,
wobei sich das Arretierteil (80) am ersten Brühkammerteil (18) und/oder am zweiten Brühkammerteil (20) befindet.

9. Gerät gemäß einem der vorherigen Ansprüche,
wobei es sich beim Arretierteil (80) um einen Arretierring handelt, der zumindest teilweise den ersten Brühkammerteil (18) und/oder den zweiten Brühkammerteil (20) umgibt.

10. Gerät gemäß einem der vorherigen Ansprüche,
wobei das Arretierteil (80) entlang einer Mittelachse des ersten Brühkammerteils und/oder des zweiten Brühkammerteils und/oder einer Brühkammerachse bewegt werden kann.

11. Gerät gemäß einem der vorherigen Ansprüche,
wobei das Arretierteil (80) relativ zum ersten Brühkammerteil und/oder zum zweiten Brühkammerteil und/oder zur Brühkammer axial bewegt werden kann.

12. Gerät gemäß einem der vorherigen Ansprüche,
wobei das Arretierteil (80) um eine Achse geschwenkt werden kann, die im Wesentlichen orthogonal zur Mittelachse des ersten Brühkammerteils und/oder zur Mittelachse des zweiten Brühkammerteils und/oder zur Brühkammerachse verläuft.

13. Gerät gemäß einem der vorherigen Ansprüche,
wobei das Arretierteil (80) durch eine Außenfläche des ersten Brühkammerteils und/oder des zweiten Brühkammerteils geführt wird.

14. Gerät gemäß einem der vorherigen Ansprüche,
wobei das Arretierteil (80) über mindestens ein elastisches Element (82) mit dem ersten Brühkammerteil verbunden ist.

15. Gerät gemäß einem der vorherigen Ansprüche,
wobei in der Arretierposition das Arretierteil (80) in Richtung der nicht arretierten Position vorgespannt ist.

16. Gerät gemäß einem der vorherigen Ansprüche,
wobei die Aktivierungsvorrichtung direkt mit dem Arretierteil verbunden ist.

17. Gerät gemäß einem der vorherigen Ansprüche,
und insbesondere einem der Ansprüche 14 bis 16, wobei der erste Brühkammerteil (18) über das mindestens eine elastische Element (82) mit dem Arretierteil (80) verbunden ist.

18. Gerät gemäß einem der vorherigen Ansprüche,
und insbesondere einem der Ansprüche 14 bis 17, wobei der erste Brühkammerteil über das elastische Element (82) und das Arretierteil (80) mit den Aktivierungsvorrichtungen (58, 62, 64, 66, 70, 74) verbunden ist.

19. Gerät gemäß einem der vorherigen Ansprüche,
und insbesondere einem der Ansprüche 14 bis 18, wobei das Elastizitätsmodul des elastischen Elements (82) so beschaffen ist, dass die Aktivierungsvorrichtung bei einer Schließbewegung den ersten Brühkammerteil (18) relativ zum zweiten Brühkammerteil (20) in die geschlossene Position bewegt, bevor das Arretierteil (80) seine Arretierposition erreicht und insbesondere bevor das Arretierteil in die Arretierposition bewegt wird.

20. Gerät gemäß einem der vorherigen Ansprüche,
wobei der Arretiermechanismus (81) beim Schließen des ersten Brühkammerteils (18) in Richtung des zweiten Brühkammerteils (20) betätigt wird, und wobei das Arretierteil nach Erreichen der Schließposition seine Arretierposition erreicht.

21. Gerät gemäß einem der vorherigen Ansprüche,
wobei die Aktivierungsvorrichtung ein Kniegelenk (62) umfasst, das insbesondere mit einem Aktivierungshebel (58) verbunden ist.

22. Gerät gemäß Anspruch 21,
wobei das Kniegelenk (62) in der geschlossenen Stellung in einer gestreckten Position angeordnet ist, die im Wesentlichen parallel zur Mittelachse des ersten Brühkammerteils und/oder zur Mittelachse des zweiten Brühkammerteils und/oder zur Brühkammerachse ausgerichtet ist.

23. Gerät gemäß einem der vorherigen Ansprüche,
wobei das Arretierteil in der Arretierposition das Verriegelungselement und/oder das Gegenverriegelungselement beim Einrasten vorspannt, wodurch der erste und zweite Brühkammerteil relativ zueinander arretiert werden.

24. Gerät gemäß einem der vorherigen Ansprüche,
wobei das Verriegelungselement und das Gegenverriegelungselement in der Arretierposition und insbesondere in der Verriegelungsposition ineinander greifen.

25. Gerät gemäß Anspruch 24,
wobei das Ineinandergreifen gelöst werden kann, indem der erste und zweite Brühkammerteil aus der geschlossenen Position in Richtung der geöffneten Position bewegt werden, wenn sich das Arretierteil nicht in der Arretierposition befindet.

26. Gerät gemäß einem der Ansprüche 24 oder 25,
wobei das Ineinandergreifen durch Bewegen des ersten und zweiten Brühkammerteils aus der geschlossenen Position in Richtung der geöffneten Position entlang einer parallel zur Mittelachse des ersten Brühkammerteils und/oder zur Mittelachse des zweiten Brühkammerteils und/oder zur Brühkammerachse verlaufenden Achse gelöst werden kann, wenn sich das Arretierteil nicht in der Arretierposition befindet.

27. Gerät gemäß einem der Ansprüche 24 bis 26,
wobei das Arretierteil das Ineinandergreifen in der Arretierposition arretiert.

28. Gerät gemäß einem der vorherigen Ansprüche,
wobei das Verriegelungselement (83) einen Überstand (108) und/oder das Gegenverriegelungselement (85) eine Halterung (110) aufweist oder umgekehrt, und wobei insbesondere der Überstand in der Arretierposition und insbesondere in der Verriegelungsposition mit der Halterung ineinander greift.

29. Gerät gemäß Anspruch 28,
wobei der Überstand (108) als ein im wesentlichen ringförmiger Ringüberstand geformt ist, der im Wesentlichen orthogonal zur Hauptachse des ersten oder des zweiten Brühkammerteils (18, 20) verläuft.

30. Gerät gemäß einem der Ansprüche 28 oder 29,
wobei der Überstand (108) mindestens eine Kugel umfasst, die in der Arretierposition und insbesondere in der Verriegelungsposition mit der Halterung (110) ineinander greift.

31. Gerät gemäß einem der Ansprüche 28 bis 30,
wobei der Überstand mindestens ein Schnappelement aufweist, das in der arretierten Position und insbesondere in der Verriegelungsposition mit der Halterung ineinander greift.

32. Gerät gemäß einem der Ansprüche 28 bis 31,
wobei der Überstand mindestens einen elastischen Ring aufweist, das in der arretierten Position und insbesondere in der Verriegelungsposition mit der Halterung ineinander greift.

33. Gerät gemäß einem der Ansprüche 28 bis 32,
wobei der Überstand mindestens ein Nockenelement aufweist, das insbesondere in Richtung der Halterung vorgespannt ist und mit dieser in der arretierten Position und insbesondere in der Verriegelungsposition ineinander greift.

34. Gerät gemäß einem der Ansprüche 28 bis 33,
wobei der Überstand (108) den äußersten Rand des ersten Brühkammerteils oder des zweiten Brühkammerteils bildet.

35. Gerät gemäß einem der Ansprüche 28 bis 34,
wobei die Halterung (110) mindestens einen Zahn (112) und/oder eine Aussparung aufweist.

36. Gerät gemäß einem der Ansprüche 28 bis 35,
wobei die Halterung mindestens einen Zahn und/oder eine Aussparung für das Ineinandergreifen mit dem Überstand des Verriegelungselements aufweist.

37. Gerät gemäß einem der Ansprüche 28 bis 36,
wobei die Halterung (110) einen besonders elastischen Abschnitt (111) aufweist, der insbesondere um eine geschwenkt werden kann, die im Wesentlichen orthogonal zur Mittelachse des ersten Brühkammerteils und/oder zur Mittelachse des zweiten Brühkammerteils und/oder zur Brühkammerachse verläuft, oder die im Idealfall um eine Achse geschwenkt werden kann, die parallel zur Überstandachse des Überstands des Verriegelungselements verläuft.

38. Gerät gemäß einem der Ansprüche 28 bis 37,
wobei die Halterung (110) die Form eines zumindest teilweise umlaufenden Rings aufweist.

39. Gerät gemäß einem der Ansprüche 28 bis 38,
wobei das Arretierteil in der Arretierposition die Halterung umgibt und verhindert, dass das Ineinandergreifen der Halterung in den Überstand gelöst wird, und insbesondere dass diese geschwenkt wird, sodass der erste Brühkammerteil in Bezug auf den zweiten Brühkammerteil arretiert wird.

40. Gerät gemäß einem der vorherigen Ansprüche,
wobei das Arretierteil in der Arretierposition zumindest teilweise von mindestens einem Verriegelungsteil (118) umgeben ist, das sich am zweiten Brühkammerteil und/oder am ersten Brühkammerteil befindet.

41. Gerät gemäß Anspruch 40,
wobei sich das Arretierteil (80) in der Arretierposition zwischen dem Verriegelungsteil (118) und mindestens einem der Verriegelungselemente, dem Gegenverriegelungselement und der Halterung befindet.

42. Gerät gemäß einem der Ansprüche 40 und 41,
wobei es sich beim Verriegelungsteil (118) um einen Sperrring handelt, der zumindest teilweise den ersten Brühkammerteil und/oder den zweiten Brühkammerteil umgibt.

43. System (1) mit einem Gerät (2) gemäß einem der Ansprüche 1 bis 42 und einer austauschbaren Kapsel (4A) .

44. System gemäß Anspruch 43,
wobei die austauschbare Kapsel ein Gehäuse (6A) und eine am Gehäuse angebrachte Austrittsfläche (12A) aufweist.

45. System gemäß Anspruch 43 oder 44,
wobei das System zudem eine weitere austauschbare Kapsel (4B) umfasst, die ein weiteres Gehäuse (6B) und eine weitere Austrittsfläche (12B) am zusätzlichen Gehäuse aufweist, und wobei die zusätzliche Austrittsfläche einen größeren Durchmesser als die Austrittsfläche aufweist,
und
wobei der erste Brühkammerteil (18) einen Hohlraum (24) aufweist, der selektiv eine der austauschbaren Kapseln sowie die zusätzliche austauschbare Kapsel aufnehmen kann,
wobei der zweite Brühkammerteil (20) den ersten Brühkammerteil um die austauschbare Kapsel oder eine zusätzliche austauschbare Kapsel verschließt, um die Brühkammer (22A,B) zu bilden,
wobei der zweite Brühkammerteil eine an die Austrittsfläche oder eine weitere Austrittsfläche angrenzende Abziehplatte (30) umfasst, wobei die Abziehplatte einen zentralen Abschnitt (32) und einen peripheren Abschnitt (34) aufweist, und wobei der zentrale Abschnitt relativ zum peripheren Abschnitt zwischen einer ersten Position und einer zweiten Position axial bewegt werden kann, und wobei der zentrale Abschnitt durch das Bewegen des ersten Brühkammerteils relativ zum zweiten Brühkammerteil zwischen der ersten und der zweiten Position bewegt wird.

46. Eine Methode zum Zubereiten einer zum Verzehr geeigneten Getränkemenge, die folgende Schritte umfasst:
Einführen eines Getränkezubereitungsprodukts, das z. B. in einer Kapsel (4A,B) mit einem Gehäuse (6A,B) und einer am Gehäuse befestigten Austrittsfläche (12A, B) enthalten ist, in den ersten und/oder zweiten Brühkammerteil (18, 20) eines Geräts (2) gemäß einem der Ansprüche 1 bis 42, wobei sich der erste und zweite Brühkammerteil in der offenen Position befinden;
Bewegen des ersten und zweiten Brühkammerteils relativ zueinander zwischen einer offenen Position und einer geschlossenen Position, wobei in der geschlossenen Position der zweite Brühkammerteil den ersten Brühkammerteil verschließt, um die Brühkammer (22A,B) zu bilden, die das Getränkezubereitungsprodukt umschließt;
Zuführen einer Flüssigkeit zum Getränkezubereitungsprodukt, um das Getränk zuzubereiten;
und
Ablassen eines zubereiteten Getränks aus der Brühkammer, wobei
beim Bewegen des ersten und zweiten Brühkammerteils relativ zueinander aus der offenen Position in die geschlossene Position, das Verriegelungselement (83) und das Gegenverriegelungselement (85) relativ zueinander aus ihrer Entriegelungsposition in ihre Verriegelungsposition bewegt werden, und wobei während und/oder nach dem Bewegen des ersten und des zweiten Brühkammerteils relativ zueinander aus der offenen Position in die geschlossene Position das Arretierteil (80) relativ zum Verriegelungselement und zum Gegenverriegelungselement aus der nicht arretierten Position in die Arretierposition bewegt wird, sodass das Ineinandergreifen des Verriegelungselements und des Gegenverriegelungselements in der Verriegelungsposition arretiert und/oder betätigt wird, wodurch das erste und das zweite Brühkammerteil relativ zueinander in ihrer geschlossenen Position arretiert werden.

47. Methode gemäß Anspruch 46,
wobei das Arretierteil (80) durch die Aktivierungsvorrichtungen (58, 62, 64, 66, 70, 74) bewegt wird.

48. Methode zum Arretieren eines ersten Brühkammerteils relativ zum zweiten Brühkammerteil eines Geräts gemäß einem der Ansprüche 1 bis 42 oder eines Systems gemäß einem der Ansprüche 43 bis 45, die folgende Schritte umfasst:
Bewegen des ersten und zweiten Brühkammerteils (18, 20) relativ zueinander zwischen einer offenen Position und einer geschlossenen Position, wobei in der geschlossenen Position der zweite Brühkammerteil den ersten Brühkammerteil verschließt, um die Brühkammer (22A, B) zu bilden;
beim Bewegen des ersten und zweiten Brühkammerteils relativ zueinander aus der offenen Position in die geschlossene Position, Bewegen des Verriegelungselements (83) und des Gegenverriegelungselements (85) relativ zueinander aus der Entriegelungsposition in die Verriegelungsposition, und
während und/oder nach dem Bewegen des ersten und des zweiten Brühkammerteils relativ zueinander aus der offenen Position in die geschlossene Position Bewegen des Arretierteils (80) relativ zum Verriegelungselement und zum Gegenverriegelungselement aus der nicht arretierten Position in die Arretierposition, sodass das Ineinandergreifen des Verriegelungselements und des Gegenverriegelungselements in der Verriegelungsposition arretiert und/oder betätigt wird, wodurch das erste und das zweite Brühkammerteil relativ zueinander in ihrer geschlossenen Position arretiert werden.

49. Methode gemäß Anspruch 48,
die das Bewegen des ersten und zweiten Brühkammerteils relativ zueinander von der offenen Position in die geschlossene Position umfasst, indem die Aktivierungsvorrichtung betätigt wird, insbesondere indem der Handgriff (58) bewegt wird, sodass das Arretierteil (80) von der Aktivierungsvorrichtung bewegt wird.

## Revendications

1. Appareil (2) de préparation d'une quantité de boisson adaptée à la consommation, comprenant :
une première partie de chambre de brassage (18) et une seconde partie de chambre de brassage (20), mobiles l'une par rapport à l'autre entre une position ouverte et une position fermée, dans lequel, dans la position fermée, la seconde partie de chambre de brassage ferme la première partie de chambre de brassage pour former une chambre de brassage (22A, B) ;
un mécanisme d'arrêt (81) pour arrêter la première partie de chambre de brassage et la seconde partie de chambre de brassage l'une par rapport à l'autre dans leur position fermée, le mécanisme d'arrêt comprenant un élément de verrouillage (83) agencé au niveau de la première partie de chambre de brassage et
un élément de contre-verrouillage (85) agencé au niveau de la seconde partie de chambre de brassage, ou vice versa l'élément de verrouillage et l'élément de contre-verrouillage étant mobiles l'un par rapport à l'autre entre une position de verrouillage et une position de non-verrouillage,
le mécanisme d'arrêt comprenant en outre une partie d'arrêt (80) pouvant être déplacée par rapport à l'élément de verrouillage et à l'élément de contre-verrouillage entre une position d'arrêt et une position de non-arrêt, dans lequel, dans la position d'arrêt, la partie d'arrêt arrête et/ou actionne un engagement de l'élément de verrouillage et de l'élément de contre-verrouillage dans leur position de verrouillage, arrêtant ainsi les première et seconde parties de chambre de brassage l'une par rapport à l'autre, et dans la position de non-arrêt, non-arrête et/ou non-actionne un engagement de l'élément de verrouillage et de l'élément de contre-verrouillage dans leur position de non-verrouillage, non-arrêtant ainsi les première et seconde parties de chambre de brassage l'une par rapport à l'autre,
**caractérisé en ce que** la partie d'arrêt (80) dans la position d'arrêt entoure au moins partiellement l'élément de verrouillage (83) et/ou l'élément de contre-verrouillage (85) depuis l'extérieur et vient particulièrement en appui contre l'élément de verrouillage et/ou l'élément de contre-verrouillage.

2. Appareil selon la revendication 1, comprenant un moyen d'activation (58, 62, 64, 66, 70, 74), tel qu'un levier (58) manuel, conçu pour déplacer la première et/ou la seconde partie de chambre de brassage, la partie d'arrêt (80) étant couplé aux moyens d'activation pour être déplacé par ces derniers.

3. Appareil selon la revendication 1 ou 2, dans lequel la chambre de brassage (22A, B) est conçue pour contenir une capsule (4A, B) contenant un produit de préparation de boisson.

4. Appareil selon l'une quelconque des revendications précédentes, dans lequel l'élément de verrouillage (83) et l'élément de contre-verrouillage (85) sont conçus de manière à être relativement mobiles l'un par rapport à l'autre entre la position de verrouillage et la position de non-verrouillage avec la première partie de chambre de brassage (18) et la seconde partie de chambre de brassage (20), respectivement, en particulier lorsque la partie d'arrêt (80) n'est pas dans sa position d'arrêt.

5. Appareil selon l'une quelconque des revendications précédentes, dans lequel l'élément de verrouillage et/ou l'élément de contre-verrouillage sont agencés d'un seul tenant au niveau d'un corps de la première partie de chambre de brassage et/ou de la seconde partie de chambre de brassage, respectivement.

6. Appareil selon l'une quelconque des revendications précédentes, dans lequel l'élément de verrouillage et/ou l'élément de contre-verrouillage sont mobiles l'un par rapport à l'autre le long d'un axe central de la première partie de chambre de brassage et/ou d'axe central de la seconde partie de chambre de brassage et/ou d'un axe de chambre de brassage, et particulièrement sans mouvement de rotation autour dudit axe.

7. Appareil selon l'une quelconque des revendications précédentes, dans lequel les première et seconde parties de chambre de brassage sont mobiles l'une par rapport à l'autre le long d'un axe central commun et/ou d'un axe de chambre de brassage, et particulièrement sans mouvement de rotation autour dudit axe, avant d'atteindre leur position fermée.

8. Appareil selon l'une quelconque des revendications précédentes, dans lequel la partie d'arrêt (80) est agencée au niveau de la première partie de chambre de brassage (18) et/ou de la seconde partie de chambre de brassage (20).

9. Appareil selon l'une quelconque des revendications précédentes, dans lequel la partie d'arrêt (80) est un anneau d'arrêt, agencée entourant au moins partiellement la première partie de chambre de brassage (18) et/ou la seconde partie de chambre de brassage (20).

10. Appareil selon l'une quelconque des revendications précédentes, dans lequel la partie d'arrêt (80) est agencée de manière mobile le long d'un axe central de la première partie de chambre de brassage et/ou de la seconde partie de chambre de brassage et/ou d'un axe de chambre de brassage.

11. Appareil selon l'une quelconque des revendications précédentes, dans lequel la partie d'arrêt (80) est agencée axialement mobile par rapport à la première partie de chambre de brassage et/ou à la seconde partie de chambre de brassage et/ou à la chambre de brassage.

12. Appareil selon l'une quelconque des revendications précédentes, dans lequel la partie d'arrêt (80) est conçue pivotante autour d'un axe sensiblement orthogonal à un axe central de la première partie de chambre de brassage et/ou un axe central de la seconde partie de chambre de brassage et/ou un axe de chambre de brassage.

13. Appareil selon l'une quelconque des revendications précédentes, dans lequel la partie d'arrêt (80) est guidée par une surface externe de la première partie de chambre de brassage et/ou de la seconde partie de chambre de brassage.

14. Appareil selon l'une quelconque des revendications précédentes, dans lequel la partie d'arrêt (80) est raccordée à la première partie de chambre de brassage par l'intermédiaire d'au moins un élément élastique (82).

15. Appareil selon l'une quelconque des revendications précédentes, dans lequel, dans la position d'arrêt, la partie d'arrêt (80) est sollicitée dans la direction de la position de non-arrêt.

16. Appareil selon l'une quelconque des revendications précédentes, dans lequel le moyen d'activation est directement couplé à la partie d'arrêt.

17. Appareil selon l'une quelconque des revendications précédentes, en particulier l'une quelconque des revendications 14 à 16, dans lequel la première partie de chambre de brassage (18) est couplée à la partie d'arrêt (80) par l'intermédiaire de l'au moins un élément élastique (82).

18. Appareil selon l'une quelconque des revendications précédentes, en particulier l'une quelconque des revendications 14 à 17, dans lequel la première partie de chambre de brassage est couplée aux moyens d'activation (58, 62, 64, 66, 70, 74) par l'intermédiaire de l'élément élastique (82) et de la partie d'arrêt (80).

19. Appareil selon l'une quelconque des revendications précédentes, en particulier l'une quelconque des revendications 14 à 18, dans lequel le module d'élasticité de l'élément élastique (82) est tel que, dans un mouvement de fermeture, le moyen d'activation déplace la première partie de chambre de brassage (18) par rapport à la seconde partie de chambre de brassage (20) dans la position fermée avant la partie d'arrêt (80) atteint sa position d'arrêt et surtout avant que la partie d'arrêt ne se déplace vers sa position d'arrêt.

20. Appareil selon l'une quelconque des revendications précédentes, dans lequel le mécanisme d'arrêt (81) est conçu de telle sorte qu'il est actionné tout en fermant la première partie de chambre de brassage (18) contre la seconde partie de chambre de brassage (20), dans lequel la partie d'arrêt atteint sa position d'arrêt après que la position fermée est atteinte.

21. Appareil selon l'une quelconque des revendications précédentes, dans lequel le moyen d'activation comprend un joint articulé (62) spécialement raccordé à un levier d'activation (58).

22. Appareil selon la revendication 21, dans lequel le joint articulé (62) dans la position fermée est agencé dans une position étirée, en particulier sensiblement alignée parallèlement à un axe central de la première partie de chambre de brassage et/ou un axe central de la seconde partie de chambre de brassage et/ou un axe de chambre de brassage.

23. Appareil selon l'une quelconque des revendications précédentes, dans lequel la partie d'arrêt dans la position d'arrêt sollicite l'élément de verrouillage et/ou l'élément de contre-verrouillage dans leur engagement, arrêtant ainsi les première et seconde parties de chambre de brassage l'une par rapport à l'autre.

24. Appareil selon l'une quelconque des revendications précédentes, dans lequel l'élément de verrouillage et l'élément de contre-verrouillage s'engrènent l'un avec l'autre dans la position d'arrêt et, en particulier dans leur position de verrouillage.

25. Appareil selon la revendication 24, dans lequel l'engrènement peut être désengagé par déplacement des première et seconde parties de chambre de brassage de leur position fermée dans la direction de leur position ouverte, lorsque la partie d'arrêt n'est pas dans la position d'arrêt.

26. Appareil selon l'une quelconque des revendications 24 ou 25, dans lequel l'engrènement peut être désengagé par déplacement des première et seconde parties de chambre de brassage de leur position fermée dans la direction de leur position ouverte le long d'un axe parallèle à un axe central de la première partie de chambre de brassage et/ou à un axe central de la seconde partie de chambre de brassage et/ou à un axe de chambre de brassage, lorsque la partie d'arrêt n'est pas dans la position d'arrêt.

27. Appareil selon l'une quelconque des revendications 24 à 26, dans lequel la partie d'arrêt arrête l'engrènement dans sa position d'arrêt.

28. Appareil selon l'une quelconque des revendications précédentes, dans lequel l'élément de verrouillage (83) comprend une saillie (108) et/ou l'élément de contre-verrouillage (85) comprend un élément de retenue (110), ou vice versa, dans lequel, particulièrement la saillie s'engrène avec l'élément de retenue dans la position d'arrêt, et particulièrement dans la position de verrouillage.

29. Appareil selon la revendication 28, dans lequel la saillie (108) est formée en tant qu'une saillie anneau sensiblement annulaire s'étendant, en particulier sensiblement orthogonale à l'axe principal de la première ou de la seconde partie de chambre de brassage (18, 20).

30. Appareil selon l'une quelconque des revendications 28 ou 29, dans lequel la saillie (108) comprend au moins une sphère s'engrènent avec l'élément de retenue (110) dans la position arrêtée, et particulièrement dans la position de verrouillage.

31. Appareil selon l'une quelconque des revendications 28 à 30, dans lequel la saillie comprend au moins un élément à cliquet, lequel s'engrène avec l'élément de retenue dans la position d'arrêt, et particulièrement dans la position de verrouillage.

32. Appareil selon l'une quelconque des revendications 28 à 31, dans lequel la saillie comprend au moins un anneau élastique, lequel s'engrène avec l'élément de retenue dans la position arrêtée, et particulièrement dans la position de verrouillage.

33. Appareil selon l'une quelconque des revendications 28 à 32, dans lequel la saillie comprend au moins un élément de came, particulièrement sollicité dans la direction de l'élément de retenue, lequel s'engrène avec celui-ci dans la position arrêtée, et particulièrement dans la position de verrouillage.

34. Appareil selon l'une quelconque des revendications 28 à 33, dans lequel la saillie (108) forme un bord extérieur de la première partie de chambre de brassage ou de la seconde partie de chambre de brassage.

35. Appareil selon l'une quelconque des revendications 28 à 34, dans lequel l'élément de retenue (110) comprend au moins une dent (112) et/ou un évidement.

36. Appareil selon l'une quelconque des revendications 28 à 35, dans lequel l'élément de retenue comprend au moins une dent et/ou un évidement pour s'engrener avec une saillie de l'élément de verrouillage.

37. Appareil selon l'une quelconque des revendications 28 à 36, dans lequel l'élément de retenue (110) comprend une partie spécialement élastique (111), en particulier pouvant pivoter autour d'un axe sensiblement orthogonal à un axe central de la première partie de chambre de brassage et/ou à un axe central de la seconde partie de chambre de brassage et/ou à un axe de chambre de brassage, de préférence pouvant pivoter autour d'un axe parallèle à un axe de saillie d'une saillie de l'élément de verrouillage.

38. Appareil selon l'une quelconque des revendications 28 à 37, dans lequel l'élément de retenue (110) présente la forme d'un anneau au moins partiellement circonférentiel.

39. Appareil selon l'une quelconque des revendications 28 à 38, dans lequel la partie d'arrêt est conçue de telle sorte que dans sa position d'arrêt, elle entoure l'élément de retenue empêchant l'élément de retenue de libérer son engrènement avec la saillie et, en particulier de pivoter, arrêtant ainsi la première partie de chambre de brassage par rapport à la seconde partie de chambre de brassage.

40. Appareil selon l'une quelconque des revendications précédentes, dans lequel, dans la position d'arrêt, la partie d'arrêt est au moins partiellement entourée par au moins une partie de verrouillage (118), agencée au niveau de la seconde partie de chambre de brassage et/ou de la première partie de chambre de brassage.

41. Appareil selon la revendication 40, dans lequel, dans la position d'arrêt, la partie d'arrêt (80) est interposée entre la partie de verrouillage (118) et l'élément de verrouillage et/ou l'élément de contre-verrouillage et/ou l'élément de retenue.

42. Appareil selon l'une quelconque des revendications 40 à 41, dans lequel la partie de verrouillage (118) est un anneau de verrouillage, agencé au moins partiellement entourant la première partie de chambre de brassage et/ou la seconde partie de chambre de brassage.

43. Système (1) comprenant un appareil (2) selon l'une quelconque des revendications 1 à 42 et une capsule (4A) échangeable.

44. Système selon la revendication 43, dans lequel la capsule échangeable comporte un corps (6A) et une face de sortie (12A) attachés au corps.

45. Système selon la revendication 43 ou 44, dans lequel ledit système comprend en outre une autre capsule (4B) échangeable comportant un autre corps (6B) et une autre face de sortie (12B) attachés à l'autre corps, l'autre face de sortie présentant un diamètre supérieur à la face de sortie, et
dans lequel la première partie de chambre de brassage (18) comprend une cavité (24), conçue pour maintenir sélectivement la capsule échangeable ou l'autre capsule échangeable, et
la seconde partie de chambre de brassage (20) est conçue pour fermer la première partie de chambre de brassage autour de la capsule échangeable ou de l'autre capsule échangeable, pour former la chambre de brassage (22A, B),
dans lequel la seconde partie de chambre de brassage comporte une plaque d'extraction (30) pour venir en appui contre la face de sortie ou l'autre face de sortie, la plaque d'extraction comprenant une partie centrale (32) et une partie périphérique (34), la partie centrale étant en particulier mobile axialement par rapport à la partie périphérique entre une première position et une seconde position, dans lequel la partie centrale est déplacée entre la première et la seconde position par le mouvement de la première partie de chambre de brassage par rapport à la seconde partie de chambre de brassage.

46. Procédé de préparation d'une quantité de boisson adaptée à la consommation, comprenant :
l'introduction d'un produit de préparation de boisson, par exemple contenu dans une capsule (4A, B) comportant un corps (6A, B) et une face de sortie (12A, B) attachée au corps, dans la première et/ou la seconde partie de chambre de brassage (18, 20) d'un appareil (2) selon l'une quelconque des revendications 1 à 42, dans lequel les première et seconde parties de chambre de brassage sont dans la position ouverte ;
le déplacement des première et seconde parties de chambre de brassage l'une par rapport à l'autre de la position ouverte à la position fermée, dans lequel, dans la position fermée, la seconde partie de chambre de brassage ferme la première partie de chambre de brassage pour former la chambre de brassage (22A, B) entourant le produit de préparation de boisson ;
la fourniture d'un fluide au produit de préparation de boisson pour la préparation de boisson ; et
la décharge d'une boisson préparée de la chambre de brassage, dans lequel, lors du déplacement des première et seconde parties de chambre de brassage l'une par rapport à l'autre de la position ouverte à la position fermée, l'élément de verrouillage (83) et l'élément de contre-verrouillage (85) sont déplacés l'un par rapport à l'autre de leur position de non-verrouillage à leur position de verrouillage, et
lors du et/ou après le déplacement des première et seconde parties de chambre de brassage l'une par rapport à l'autre de la position ouverte à la position fermée, la partie d'arrêt (80) est déplacée par rapport à l'élément de verrouillage et à l'élément de contre-verrouillage de sa position de non-arrêt à sa position d'arrêt, arrêtant et/ou actionnant ainsi un engagement de l'élément de verrouillage et de l'élément de contre-verrouillage dans leur position de verrouillage de telle sorte que la première partie de chambre de brassage et la seconde partie de chambre de brassage sont arrêtées l'une par rapport à l'autre dans leur position fermée.

47. Procédé selon la revendication 46, dans lequel la partie d'arrêt (80) est déplacée par les moyens d'activation (58, 62, 64, 66, 70, 74).

48. Procédé de verrouillage d'une première partie de chambre de brassage par rapport à une seconde partie de chambre de brassage d'un appareil selon l'une quelconque des revendications 1 à 42 ou d'un système selon l'une quelconque des revendications 43 à 45, comprenant les étapes suivantes :
le déplacement des première et seconde parties de chambre de brassage (18, 20) l'une par rapport à l'autre de la position ouverte à la position fermée, dans lequel, dans la position fermée, la seconde partie de chambre de brassage ferme la première partie de chambre de brassage pour former la chambre de brassage (22A, B) ;
le déplacement, pendant le déplacement des première et seconde parties de chambre de brassage l'une par rapport à l'autre de la position ouverte à la position fermée, de l'élément de verrouillage (83) et de l'élément de contre-verrouillage (85) l'un par rapport à l'autre de la position de non-verrouillage à la position de verrouillage ; et
le déplacement, lors du et/ou après le déplacement des première et seconde parties de chambre de brassage l'une par rapport à l'autre de la position ouverte à la position fermée, de la partie d'arrêt (80) par rapport à l'élément de verrouillage et à l'élément de contre-verrouillage de sa position de non-arrêt à sa position d'arrêt, arrêtant et/ou actionnant ainsi un engagement de l'élément de verrouillage et de l'élément de contre-verrouillage dans leur position de verrouillage de telle sorte que la première partie de chambre de brassage et la seconde partie de chambre de brassage sont arrêtées l'une par rapport à l'autre dans leur position fermée.

49. Procédé selon la revendication 48, comprenant le déplacement des première et seconde parties de chambre de brassage l'une par rapport à l'autre de la position ouverte à la position fermée par activation des moyens d'activation, et particulièrement par déplacement d'un levier (58) manuel, dans lequel la partie d'arrêt (80) est déplacée par les moyens d'activation.
